# EUROPEAN PATENT APPLICATION

(11) **EP 4 696 757 A1**
(43) Date of publication of application: **18.02.2026**
(21) Application number: 24788763.1
(22) Date of filing: 10.04.2024
(51) Int. Cl.: C09J 175/04, B32B 27/00, B32B 27/40, C08G 18/10, C08G 18/44, C08G 18/65, C09J 11/06, C09J 175/02, G02B 1/04, G02B 5/23, G02C 7/00, G02C 7/10

(54) **ADHESIVE COMPOSITION, CURED BODY, LAMINATE, OPTICAL ARTICLE, LENS, AND SPECTACLES**

(30) Priority: 12.04.2023 JP 2023065260
(71) Applicant: TOKUYAMA CORPORATION, Yamaguchi 745-8648 (JP)
(72) Inventor: GOTO, Kenta, Shunan-shi, Yamaguchi 745-8648 (JP); SHIMIZU, Yasutomo, Shunan-shi, Yamaguchi 745-8648 (JP); HIRAREN, Toshimitsu, Shunan-shi, Yamaguchi 745-8648 (JP); KAWASHIMA, Takahiro, Shunan-shi, Yamaguchi 745-8648 (JP); MORIMOTO, Miki, Shunan-shi, Yamaguchi 745-8648 (JP)
(74) Representative: Kraus & Lederer PartGmbB
(86) International application number: PCT/JP2024/014532
(87) International publication number: WO 2024/214739

(57) **Abstract**

The purpose of the present disclosure is to provide an adhesive composition enabling the formation of an adhesive layer having excellent functionality, a cured body thereof, a laminate, an optical article, a lens, and spectacles. One embodiment of the present invention provides an adhesive composition. The adhesive composition contains a polyurethane urea resin and an organic solvent. The polyurethane urea resin has a urea bond, a urethane bond, and a structure represented by formula (I). In formula (I), R¹ and R² are each independently a linear alkylene group having 3 or more and 10 or less carbon atoms.
l is 0 or 1 or more and 25 or less.
n and m are each independently 2 or more and 70 or less.

## Description

### TECHNICAL FIELD

The present invention relates to an adhesive composition, a cured product, a laminate, an optical article, a lens, and glasses.

### BACKGROUND ART

Plastic glasses are glasses that use plastic lenses as lenses. The plastic lenses are manufactured, for example, by applying various processes to semi-finished lenses that are half-finished products. A convex front surface of each of the semi-finished lenses is provided with a functional layer such as a hard coat layer or an antireflection film. A concave back surface of each of the semi-finished lenses is subjected to cutting and polishing processing.

In recent years, photochromic, light control lenses that change color tone depending on an amount of ultraviolet light have been attracting attention. The light control lenses are obtained by imparting photochromic compounds to plastic lenses. The photochromic compounds are compounds that can reversibly produce two or more isomeric forms with absorption spectra different from each other by the action of light.

As methods for manufacturing photochromic lenses, a kneading method in which a photochromic compound is dispersed in a matrix of a semi-finished lens, a lamination method in which a layer containing a photochromic compound is provided on a surface of a semi-finished lens, etc., have conventionally been used.

A binder sheet method is a method in which a semi-finished lens is manufactured by integrating a binder sheet which is a resin layer containing a photochromic compound sandwiched between two optical sheets with a lens substrate. In this method, for example, the semi-finished lens is obtained by mounting the binder sheet in a mold and injection-molding a thermoplastic resin toward it. The binder sheet method tends to increase production efficiency and facilitate mass production compared to the kneading method or the lamination method since a semi-finished lens can be manufactured using a freestanding article containing a photochromic compound.

### Citation List

### Patent Documents

Patent Document 1: Japanese Unexamined Patent Application, Publication No. 2016-169363
Patent Document 2: PCT International Publication No. WO2013/099640
Patent Document 3: Japanese Unexamined Patent Application, Publication No. 2013-033131

### DISCLOSURE OF THE INVENTION

### Problems to be Solved by the Invention

An object of the present invention is to provide an adhesive composition capable of achieving an adhesive layer with excellent functionality, and a cured product, a laminate, an optical article, a lens, and glasses produced therewith. Means for Solving the Problems

According to the present disclosure, an adhesive composition is provided. The adhesive composition includes a polyurethane urea resin and an organic solvent. The polyurethane urea resin has a urea bond, a urethane bond, and a structure represented by Formula (I) below.

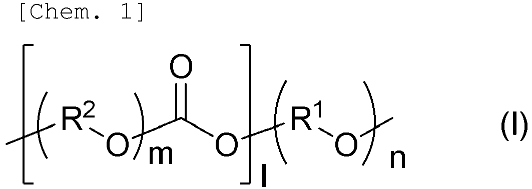

In Formula (I), R¹ and R² are each independently a linear alkylene group having 3 or more and 10 or less carbon atoms;
l is 0, or 1 or more and 25 or less; and
n and m are each independently 2 or more and 70 or less.

According to the present disclosure, a cured product is provided. The cured product is a cured product of an adhesive composition according to an embodiment.

According to the present disclosure, a laminate is provided. The laminate includes a resin layer and an optical substrate. The resin layer includes a cured product according to an embodiment.

According to the present disclosure, an optical article is provided. The optical article includes a laminate according to an embodiment.

According to the present disclosure, a lens is provided. The lens includes an optical article according to an embodiment.

According to the present disclosure, glasses are provided. The glasses include lenses according to another embodiment.

### Effects of the Invention

The present invention provides an adhesive composition capable of achieving an adhesive layer with excellent functionality, and a cured product, a laminate, an optical article, a lens, and glasses produced therewith.

### BRIEF DESCRIPTION OF THE DRAWINGS

FIG. 1 is a cross-sectional view schematically showing one exemplary laminate according to an embodiment;
FIG. 2 is a cross-sectional view schematically showing another exemplary laminate according to an embodiment;
FIG. 3 is a cross-sectional view schematically showing one exemplary a coat layer-containing laminate according to an embodiment;
FIG. 4 is a cross-sectional view schematically showing one exemplary optical article according to an embodiment; and
FIG. 5 is a perspective view schematically showing one exemplary glasses according to an embodiment.

### PREFERRED MODE FOR CARRYING OUT THE INVENTION

According to an embodiment, an adhesive composition is provided. The adhesive composition includes a polyurethane urea resin and an organic solvent. The polyurethane urea resin has a urea bond, a urethane bond, and a structure represented by Formula (I) above.

This adhesive composition can be used to achieve an adhesive layer with excellent functionality. The reasons for this are believed to be as follows. First, a functional dye includes a compound that has a selective absorption ability for visible light, as well as a compound that develops a color, decolors, or changes in color by energy such as light, heat, an electric field, or pressure. Such a functional dye can exert a specific function by undergoing a structural change under a specific condition. Typically, a matrix of a plastic cured product has a rigid structure. Therefore, the functional dye in the cured product is less likely to undergo a structural change than that in solution, which may limit its function. An adhesive composition according to an embodiment includes a polyurethane urea resin having a structure represented by Formula (I) above. In other words, this polyurethane urea resin has a structure that includes a linear alkylene glycol having 3 or more and 10 or less carbon atoms as a repeating unit. In a cured product of an adhesive composition including such a polyurethane urea resin, this alkylene glycol chain structure is believed to contribute to providing a matrix in which a functional dye can easily structurally change.

In other words, the polyurethane urea resin is a resin including a plurality of urethane bonds (-OC(=O)N(H)-) each produced by a polyaddition reaction of an isocyanate group (-N=C=O) and a hydroxyl group (-OH) and a plurality of urea bonds (-NH-C(=O)-NH-) each produced by a polyaddition reaction of an isocyanate group and an amino group (-NH₂). Such a resin is believed to have a complex entangled structure of a polymer chain obtained by reacting, for example, a urethane prepolymer obtained by reacting a diisocyanate and a diol with a diamine. In a urethane urea resin, intermolecular interaction by, for example, a hydrogen bond is believed to occur between polymer chains. A structure represented by Formula (I) has a smaller proportion of heteroatoms such as oxygen atoms per unit mass than a polypropylene glycol chain structure, a chain consisting of a polycarbonate structure, or a polyester polycarbonate structure. Therefore, the structure represented by Formula (I) is considered to be less polar and less likely to cause intermolecular interaction than other structures. In a cured product of the polyurethane urea resin having the structure represented by Formula (I), it is believed that a more flexible matrix having a relatively large distance between polymer chains is formed due to low cohesiveness between the polymer chains. Therefore, in the cured product, a functional dye is less likely to be prevented from structurally changing and thus can exert excellent functionality. An adhesive composition according to an embodiment will be described in detail.

### [Adhesive composition]

An adhesive composition according to an embodiment includes a polyurethane urea resin and an organic solvent.

### (Polyurethane urea resin)

A polyurethane urea resin has a urea bond, a urethane bond, and a structure represented by Formula (I) below. The structure represented by Formula (I) below is typically a diol-derived structure. It can be confirmed that the urethane urea resin has the following structure, for example, by a nuclear magnetic resonance spectroscopy (NMR) analysis.

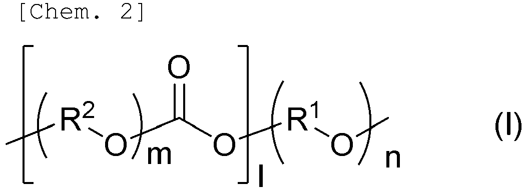

In Formula (I), R¹ and R² are each independently a linear alkylene group having 3 or more and 10 or less carbon atoms. R¹ and R² are each independently preferably a linear alkylene group having 4 or more and 8 or less carbon atoms and more preferably a linear alkylene group having 4 or more and 6 or less carbon atoms. R¹ and R² are particularly preferably a normal-butylene group. R¹ and R² preferably have the same structure as each other.

l is 0, or 1 or more and 25 or less. From the viewpoint of enhancing functionality of an adhesive layer, l is preferably 0. In other words, since a polyalkylene glycol structure is highly flexible, a urethane urea resin with such a structure can be used to enhance functionality of the adhesive layer. On the other hand, from the viewpoint of enhancing adhesiveness of the adhesive layer, l is preferably 1 or more and 25 or less. In other words, use of a polyurethane urea resin with a polyether (poly)carbonate structure tends to enhance adhesiveness to a resin such as an optical substrate. Adhesiveness tends to be particularly enhanced when the resin has a polycarbonate structure. l is preferably 1 or more and 7 or less and more preferably 2 or more and 6 or less.

n and m are each independently 2 or more and 70 or less. m is 0 when l is 0.
n and m are numbers of repetitions of repeating units R¹O and R²O, respectively.
n and m are each preferably 3 or more. A higher proportion of a molecular weight of R¹O or R²O tends to enhance functionality of an adhesive layer. On the other hand, from the viewpoint of enhancing heat resistance of the adhesive layer, n and m are each preferably 16 or less and more preferably 11 or less. A lower proportion of a molecular weight of R¹O or R²O tends to increase a softening point of a polyurethane urea resin and heat resistance of the adhesive layer.
n and m may be 7 or more and 10 or less, 9 or more and 15 or less, 20 or more and 40 or less, 25 or more and 35 or less, or 50 or more and 60 or less.

A softening point of a polyurethane urea resin is, for example, 40°C or more and 200°C or less. The softening point is preferably 50°C or more and more preferably 60°C or more. A higher softening point tends to increase heat resistance of an adhesive layer. The softening point can be measured, for example, by a thermomechanical analysis (TMA). A urethane urea resin may have a structure represented by Formula (II) below.

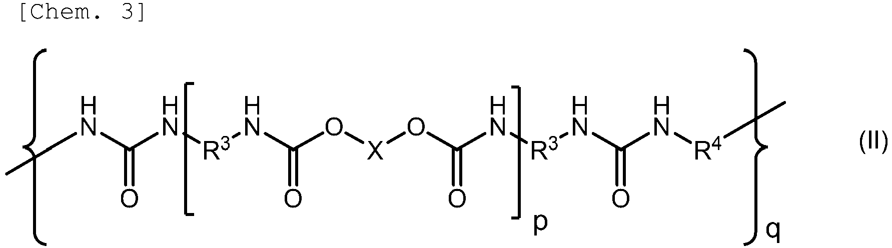

In Formula (II), X is a structure represented by Formula (I); and
R³ and R⁴ are each independently a substituted or unsubstituted linear or branched alkylene group, a substituted or unsubstituted cycloalkylene group, a substituted or unsubstituted dicycloalkylene group, a substituted or unsubstituted arylene group, a substituted or unsubstituted diarylene group, a norbornyl group, or a divalent group represented by Formula (III) below:

   -R⁵-Y-R⁵- ( III)

   in which R⁵ is a substituted or unsubstituted cycloalkylene group or a substituted or unsubstituted arylene group; and
Y is a substituted or unsubstituted linear or branched alkylene group, or an oxygen atom.

R³ may be a diisocyanate-derived structure. R³ is preferably a substituted or unsubstituted linear or branched alkylene group, a substituted or unsubstituted cycloalkylene group, a substituted or unsubstituted dicycloalkylene group, or a divalent group represented by Formula (III) and more preferably a substituted or unsubstituted cycloalkylene group.

R⁴ may be a diamine-derived structure. R⁴ is preferably a substituted or unsubstituted linear or branched alkylene group, a substituted or unsubstituted cycloalkylene group, a substituted or unsubstituted dicycloalkylene group, or a divalent group represented by Formula (III) and more preferably a substituted or unsubstituted cycloalkylene group or a divalent group represented by Formula (III). R³ and R⁴ preferably have structures different from each other.

For R³ or R⁴, the alkylene group has, for example, 1 or more and 10 or less carbon atoms and preferably 3 or more and 8 or less carbon atoms. The alkylene group is preferably an unsubstituted linear alkylene group.

For Y, the alkylene group has, for example, 1 or more and 5 or less carbon atoms and preferably 1 or 2 carbon atoms. The alkylene group is preferably an unsubstituted methylene group.

For R³, R⁴, or R⁵, the cycloalkylene group has, for example, 4 or more and 20 or less carbon atoms and preferably 6 or more and 15 or less carbon atoms. The cycloalkylene group is preferably an unsubstituted cyclohexyl group or a cyclohexyl group having an alkyl group as a substituent.

For R³, R⁴, or R⁵, the arylene group has, for example, 4 or more and 20 or less carbon atoms and preferably from 6 or more and 15 or less carbon atoms. The arylene group is preferably an unsubstituted phenylene group or an unsubstituted naphthylene group.

p is an integer of 1 or more and 9 or less.
q is an integer of 3 or more and 56 or less.
q is preferably 7 or more and 38 or less.

Both ends of the urethane urea resin represented by Formula (II) above may be an isocyanate group or a hydroxyl group, or may be modified with a terminating group. Preferred examples of the terminating group include a substituted or unsubstituted alkyl group, a substituted or unsubstituted piperidino group, or a substituted or unsubstituted alkylenepiperidino group. The alkyl group has, for example, 1 or more and 10 or less carbon atoms and preferably 2 or more and 7 or less carbon atoms. A piperidino group is preferably a 2,2,6,6-tetramethylpiperidino group. Such a structure tends to improve light stability due to an effect of a hindered amine light stabilizing agent.

### (Organic solvent)

In an adhesive composition, a polyurethane urea resin may be dissolved or dispersed in an organic solvent. The polyurethane urea resin accounts for, for example, 10% by mass or more and 60% by mass or less of the adhesive composition. This proportion is preferably 15% by mass or more and 50% by mass or less and more preferably 20% by mass or more and 40% or less.

The organic solvent is capable of dissolving or dispersing the polyurethane urea resin. The organic solvent includes, for example, at least one selected from the group consisting of N,N-dimethylformamide, N-methyl-2-pyrrolidone (NMP), tertiary-butanol, diethyl ketone, tetrahydrofuran, cyclohexanone, cyclopentanone, methyl isobutyl ketone, and toluene. The organic solvent preferably includes at least one selected from the group consisting of N,N-dimethylformamide, tertiary-butanol, diethyl ketone, tetrahydrofuran, and toluene.

In the adhesive composition, the organic solvent makes up a remainder of other substances included in the adhesive composition. The organic solvent accounts for, for example, 40% by mass or more and 90% by mass or less of the adhesive composition. This proportion is preferably 50% by mass or more and 85% by mass or less and more preferably 60% by mass or more and 80% by mass or less.

### (Functional dye)

An adhesive composition may further include a functional dye. The functional dye includes, for example, at least one selected from the group consisting of a photochromic compound, a UV light absorbing agent, a blue light absorbing agent, a high-energy visible light absorbing agent, an infrared absorbing agent, a dye, and an electromic compound.

For example, at least one selected from the group consisting of a chromene compound, a fulgide compound, and a spiroxazine compound is used as the photochromic compound. The photochromic compound is preferably the chromene compound. The chromene compound includes a compound having a 1-benzopyran skeleton, a spiropyran compound having a spiropyran skeleton, or a naphthopyran compound having a naphthopyran skeleton. The naphthopyran compound includes an indenonaphthopyran compound having an indenonaphthopyran skeleton. The chromene compound preferably includes an indenonaphthopyran compound having an indeno[2,1-f]naphtho[1,2-b]pyran skeleton. A cured product including a chromene compound having an indeno[2,1-f]naphtho[1,2-b]pyran skeleton tends to have excellent durability. The indenonaphthopyran compound preferably includes a compound shown by Formula (IIIa) below.

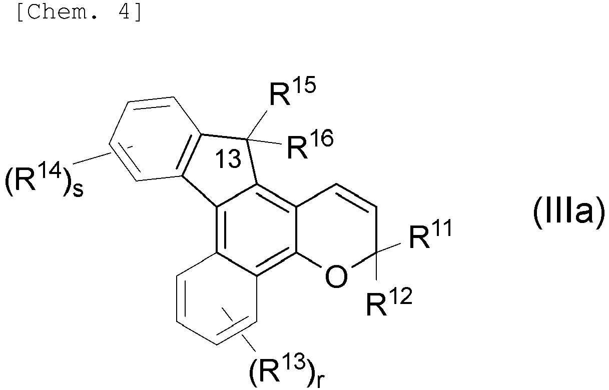

In Formula (IIIa), R¹¹, R¹², R¹³, R¹⁴, R¹⁵, and R¹⁶ are each independently a hydrogen atom, a hydroxyl group, a methoxycarbonyl group, an ethoxycarbonyl group, an alkyl group, a cycloalkyl group, a haloalkyl group, an alkoxy group, an amino group, a substituted amino group, an optionally substituted heterocyclic group, a halogen atom, an alkylthio group, an optionally substituted arylthio group, a nitro group, a formyl group, a hydroxycarbonyl group, an alkylcarbonyl group, an alkoxycarbonyl group, an optionally substituted aralkyl group, an optionally substituted aralkoxy group, an optionally substituted aryloxy group, an optionally substituted aryl group, an optionally substituted heteroaryl group, a thiol group, an alkoxyalkylthio group, a haloalkylthio group, an optionally substituted cycloalkylthio group, or an oligomeric group.

The alkyl group preferably has 1 to 10 carbon atoms. Examples of the alkyl group include a methyl group, an ethyl group, an n-propyl group, an isopropyl group, an n-butyl group, a sec-butyl group, a tert-butyl group, a pentyl group, or a hexyl group.

The haloalkyl group preferably has 1 to 10 carbon atoms. The haloalkyl group is preferably an alkyl group substituted with a fluorine atom, a chlorine atom, or a bromine atom. Suitable examples of the haloalkyl group include a trifluoromethyl group, a tetrafluoroethyl group, a chloromethyl group, a 2-chloroethyl group, or a bromomethyl group.

A ring member of the cycloalkyl group preferably has 3 to 8 carbon atoms. Examples of the cycloalkyl group include a cyclopropyl group, a cyclobutyl group, a cyclopentyl group, a cyclohexyl group, etc. Note that, the cycloalkyl group may have a substituent, but a number of carbon atoms (3 to 8 carbon atoms) in the ring member shall not include a number of carbon atoms in the substituent.

The alkoxy group preferably has 1 to 10 carbon atoms and more preferably 1 to 6 carbon atoms. Suitable examples of the alkoxy group include a methoxy group, an ethoxy group, an n-propoxy group, an isopropoxy group, an n-butoxy group, a sec-butoxy group, or a tert-butoxy group.

The amino group is a primary amino group (-NH₂). The substituted amino group is a secondary or tertiary amino group with one or two hydrogen atoms substituted. Examples of a substituent that the substituted amino group has include an alkyl group having 1 to 6 carbon atoms, a haloalkyl group having 1 to 6 carbon atoms, an alkoxy group having 1 to 6 carbon atoms, a cycloalkyl group having 3 to 7 carbon atoms, an aryl group having 6 to 14 carbon atoms, a heteroaryl group having 4 to 14 carbon atoms, etc. Suitable examples of the amino group can include an amino group, a methylamino group, a dimethylamino group, an ethylamino group, a diethylamino group, a phenylamino group, a diphenylamino group, etc.

A ring member of the heterocyclic group preferably has 3 to 10 carbon atoms. The heterocyclic group may be an aliphatic heterocyclic group or an aromatic heterocyclic group. Specific examples of the aliphatic heterocyclic group include a morpholino group, a piperidino group, a pyrrolidinyl group, a piperazino group, an N-methylpiperazino group, etc. Specific examples of the aromatic heterocyclic ring include an indolinyl group. The heterocyclic ring may be optionally substituted. The substituent is preferably an alkyl group having 1 to 10 carbon atoms. Suitable examples of a substituted heterocyclic group include a 2,6-dimethylmorpholino group, a 2,6-dimethylpiperidino group, or a 2,2,6,6-tetramethylpiperidino group, etc.

Examples of the halogen atom include a fluorine atom, a chlorine atom, a bromine atom, an iodine atom, etc.

The alkylthio group preferably has 1 to 10 carbon atoms. Examples of the alkylthio group include a methylthio group, an ethylthio group, an n-propylthio group, an isopropylthio group, an n-butylthio group, a sec-butylthio group, a t-butylthio group, etc.

The arylthio group preferably has 6 to 10 carbon atoms. Examples of the arylthio group include a phenylthio group, a 1-naphthylthio group, a 2-naphthylthio group, etc.

The alkylcarbonyl group preferably has 2 to 10 carbon atoms. Examples of the alkylcarbonyl group include an acetyl group, an ethylcarbonyl group, etc.

The alkoxycarbonyl group preferably has 2 to 10 carbon atoms. Examples of the alkoxycarbonyl group include a methoxycarbonyl group, an ethoxycarbonyl group, etc.

The aralkyl group preferably has 7 to 11 carbon atoms. Examples of the aralkyl group include a benzyl group, a phenylethyl group, a phenylpropyl group, a phenylbutyl group, a naphthylmethyl group, etc.

The aralkoxy group preferably has 7 to 11 carbon atoms. Examples of the aralkoxy group include a benzyloxy group, a naphthylmethoxy group, etc.

The aryl group preferably has 6 to 12 carbon atoms. Examples of the aryl group include a phenyl group, a 1-naphthyl group, a 2-naphthyl group, etc.

The aryloxy group preferably has 6 to 12 carbon atoms. Examples of the aryloxy group include a phenyloxy group, a naphthyloxy group, etc.

The heteroaryl group preferably has 3 to 12 carbon atoms. Examples of the heteroaryl group include a thienyl group, a furyl group, a pyrrolinyl group, a pyridyl group, a benzothienyl group, a benzofuranyl group, a benzopyrrolinyl group, etc.

The alkoxyalkylthio group preferably has 2 to 10 carbon atoms. Examples of the alkoxyalkylthio group include a methoxymethylthio group, a methoxyethylthio group, a methoxy n-propylthio group, a methoxy n-butylthio group, an ethoxytehylthio group, an n-propoxypropylthio group, etc.

The haloalkylthio group preferably has 1 to 10 carbon atoms. Examples of the haloalkylthio group include a trifluoromethylthio group, a tetrafluoroethylthio group, a chloromethylthio group, a 2-chloroethylthio group, a bromomethylthio group, etc.

A ring member of the cycloalkylthio group preferably has 3 to 8 ring members. Examples of the cycloalkylthio group include a cyclopropylthio group, a cyclobutylthio group, a cyclopentylthio group, a cyclohexylthio group, etc. Note that, the cycloalkylthio group may have a substituent, but a number of carbon atoms (3 to 8 carbon atoms) in the ring member shall not include a number of carbon atoms in the substituent.

The oligomeric group includes an oligomeric chain, a linking group, and a terminal group.

The oligomeric chain can include at least one selected from the group consisting of a polyalkylene oxide chain, a polysiloxane chain, and a polyester chain. The oligomeric chain is a divalent group.

The polyalkylene oxide chain includes a linear or branched polyalkylene oxide having 1 or more and 10 or less carbon atoms as a repeating unit. A number of repetitions of the repeating unit is, for example, 3 or more and 1000 or less. The repeating unit is, for example, -CH₂O-, -CH₂CH₂O-, - CH (CH₃)CH₂O-, -CH₂CH(CH₃)O-, -CH₂CH₂CH₂O-, or -CH₂CH₂C(CH₃)O-.

The polysiloxane chain includes, for example, dimethylsilyleneoxy (-Si(CH₃)₂O-) as a repeating unit. A number of repetitions of the repeating unit is, for example, 3 or more and 1000 or less.

The polyester chain includes, for example, -OC(=O)CH₂-, - OC(=O)CH₂CH₂CH₂CH₂C(=O)O-, or -OC(=O)CH₂CH₂CH₂CH₂C(=O)OCH₂CH₂-) as a repeating unit. A number of repetitions of the repeating unit is, for example, 3 or more and 1000 or less.

The linking group links a photochromic compound to one end of an oligomeric chain. The linking group is, for example, -O-, -O-CH₂CH₂-O-, -O-CH₂CH₂-OC(=O)CH₂CH₂C(=O)-O-, or -O-CH₂CH₂-OC(=O)CH₂CH₂C(=O)-O-CH₂-. The linking group may be a divalent group or a divalent or more group.

The terminal group binds to the other end of the oligomeric chain. The terminal group is, for example, a linear or branched alkyl group having 1 or more and 10 or less carbon atoms, a linear or branched alkoxy group having 1 or more and 10 or less carbon atoms, a linear or branched alkenyl group having 2 or more and 30 or less carbon atoms, or an organic residue having 1 or more and 10 or less carbon atoms and 1 or more and 3 or less oxygen atoms. The terminal group is preferably a methyl group.

The oligomeric group may include a first linking group, an oligomeric chain, and a second linking group. The first linking group and the second linking group may have a structure identical to or different from each other. The first linking group is linked to a first photochromic compound. The second linking group is linked to a second photochromic compound. The first photochromic compound and the second photochromic compound may have a structure identical to or different from each other.

The cycloalkyl group, the arylthio group, the aralkyl group, the aralkoxy group, the aryloxy group, the aryl group, the heteroaryl group, and the cycloalkylthio group may be unsubstituted or may have a substituent.

The substituent the cycloalkyl group, the arylthio group, the aralkyl group, the aralkoxy group, the aryloxy group, the aryl group, the heteroaryl group, or the cycloalkylthio group may have may be selected from the group consisting of a primary amino group, a secondary amino group, a tertiary amino group, an alkyl group having 1 to 10 carbon atoms, a haloalkyl group having 1 to 10 carbon atoms, an alkoxy group having 1 to 10 carbon atoms, a haloalkoxy group having 1 to 10 carbon atoms, an alkylthio group having 1 to 10 carbon atoms, a hydroxyl group, a cycloalkyl group having 3 to 8 carbon atoms, an aryl group having 6 or more and 12 or less carbon atoms, an alkylaryl group having 1 or more and 20 or less carbon atoms, a heterocycloalkyl group having 1 or more and 8 or less carbon atoms and 1 or more and 5 or less heteroatoms, a heteroaryl group having 1 or more and 8 or less carbon atoms and 1 or more and 5 or less heteroatoms, an aryloxy group having 6 or more and 12 or less carbon atoms, an arylthio group having 6 or more and 12 or less carbon atoms, a cyano group, a nitro group, and a halogen atom. A number of the substituents may be 1, or 2 or more.

Two R¹³s adjacent to each other, two R¹⁴s adjacent to each other, and R¹⁵ and R¹⁶ each may be combined with each other to form an aliphatic ring having 2 or more and 5 or less carbon atoms, an aliphatic heterocyclic ring having 1 or more and 4 or less carbon atoms and 1 or more and 3 or less heteroatoms, an aromatic ring having 4 or more and 12 or less carbon atoms, or an aromatic heterocyclic ring having 3 or more and 11 or less carbon atoms and 1 or more and 6 or less heteroatoms. The aliphatic ring, the aliphatic heterocyclic ring, the aromatic ring, and the aromatic heterocyclic ring may be unsubstituted or may have at least one substituent selected from the group of the above-described substituents. R¹⁵ and R¹⁶ may form a substituted or unsubstituted spirocycle with a carbon atom at position 13 as a spiroatom. This spirocycle is preferably an aliphatic ring of which ring member has 5 to 16 carbon atoms. The aliphatic ring further preferably has an alkyl group having 1 to 3 carbon atoms as a substituent.

In Formula (IIIa), r and s are each independently an integer of 0 or more and 4 or less.
r and s may be 1 or more or 2 or more.

A UV light absorbing agent has an absorption wavelength in an ultraviolet (UV) region of 400 nm or less. The UV light absorbing agent may have a maximum absorption wavelength in a region of 330 nm or more and 380 nm or less or 250 nm or more and 330 nm or less. The UV light absorbing agent may be an organic compound. For example, at least one selected from the group consisting of a benzophenone derivative, ethylhexyl methoxycinnamate, a benzotriazole derivative, and a triazine derivative is used as the UV light absorbing agent. The UV light absorbing agent preferably includes at least one selected from the group consisting of a benzophenone derivative, ethylhexyl methoxycinnamate, and a benzotriazole derivative.

A compound having an absorption peak in a wavelength region of more than 400 nm and 450 nm or less in an absorption spectrum can be used as a blue light absorbing agent. Such a compound is, for example, at least one selected from the group consisting of a perylene compound, a porphyrin compound, a carotenoid compound, and a cyanine compound. The blue light absorbing agent is preferably a porphyrin compound and more preferably a tetraazaporphyrin compound.

A high-energy visible light absorbing agent is a blue light absorbing agent with an absorption peak in a wavelength region of 400 nm or more and 420 nm or less. The high-energy visible light absorbing agent may be the same as the blue light absorbing agent.

A dye preferably includes a compound having an absorption peak in a wavelength region of 540 nm or more and 650 nm or less in an absorption spectrum, and more preferably a compound having an absorption peak in a wavelength region of 550 nm or more and 600 nm or less. Inclusion of such a compound results in an optical article having an enhanced antiglare property. Examples of such a compound include a nitro compound, an azo compound, an anthraquinone compound, a threne compound, a porphyrin compound, a rare earth metal compound, etc. Such a compound is preferably at least one selected from the group consisting of a tetraazaporphyrin compound and a neodymium compound.

Examples of an electromic compound include an organic matter such as viologen, a polymer having an electromic property, a metal salt complex having a d atom, etc.

A functional dye accounts for, for example, 0.1% by mass or more and 10% by mass or less, preferably 1% by mass or more and 5% by mass or less of an adhesive composition.

### (Second polyisocyanate)

An adhesive composition may further include a second polyisocyanate. A cured product of the adhesive composition including the second polyisocyanate can have a cross-linking structure such as an allophanate bond or a biuret bond between polyurethane urea resins. A cured product with such a cross-linking structure tends to have higher heat resistance due to an increased softening point.

The second polyisocyanate includes two or more or three or more isocyanate groups. The second polyisocyanate preferably has two or three isocyanate groups.

The second polyisocyanate preferably includes at least one selected from the group consisting of an aliphatic isocyanate, an alicyclic isocyanate, and an aromatic isocyanate compound. The second polyisocyanate more preferably includes an alicyclic isocyanate, a trimer of an isocyanate (isocyanurate compound), and a biuret compound of an isocyanate. A single type of the second polyisocyanate may be used, or a mixture of a plurality of types of the second polyisocyanate may be used.

Examples of the aliphatic isocyanate include pentamethylene diisocyanate, hexamethylene diisocyanate, heptamethylene diisocyanate, octamethylene diisocyanate, 2,4,4,-trimethylhexanemethylene diisocyanate, 1,2-bis(2-isocyanatoethylthio)ethane, etc.

Examples of the alicyclic isocyanate include isophorone diisocyanate, 1,3-bis(isocyanatomethyl)cyclohexane, 1,4-bis(isocyanatomethyl)cyclohexane, dicyclohexylmethane-4,4'-diisocyanate (hydrogenated diphenylmethane diisocyanate), norbornane diisocyanate, 2,5-bis(isocyanatomethyl)-bicyclo[2,2,1]-heptane, 2,6-bis(isocyanatomethyl)-bicyclo[2,2,1]-heptane, etc.

Examples of the aromatic isocyanate include xylenediisocyanate (o-, m-, p-), toluene-2,4-diisocyanate, toluene-2,6-diisocyanate, 1,3-bis(isocyanatomethyl)cyclohexane, 1,4-bis(isocyanatomethyl)cyclohexane, 4,4'-diphenylmethane diisocyanate, etc.

Examples of the second polyisocyanate include an isomeric mixture of 4,4'-methylenebis(cyclohexylisocyanate), cyclobutan-1,3-diisocyanate, cyclohexane-1,3-diisocyanate, cyclohexane-1,4-diisocyanate, hexahydrotoluene-2,4-diisocyanate, hexahydrotoluene-2,6-diisocyanate, hexahydrophenylene-1,3-diisocyanate, or hexahydrophenylene-1,4-diisocyanate. In addition, a nurate compound, a biuret compound, an adduct, etc., of a polyisocyanate compound can also be used without any restrictions. Examples thereof include a trimer of isophorone diisocyanate (isocyanurate compound), hexamethylene diisocyanate, a biuret compound of hexamethylene diisocyanate, an isocyanurate compound of hexamethylene diisocyanate, and an adduct compound of hexamethylene diisocyanate.

A block isocyanate in which an isocyanate group in the second polyisocyanate shown above is blocked can also be used.

The second polyisocyanate accounts for, for example, 1% by mass or more and 20% by mass or less and preferably 1% by mass or more and 10% by mass or less of an adhesive composition.

A ratio S2/S1 of a mass S2 of the second polyisocyanate to a mass S1 of the polyurethane urea resin is, for example, 0.05 or more and 0.4 or less and preferably 0.05 or more and 0.3 or less.

### (Additive)

An adhesive composition may include, for example, at least one additive selected from the group consisting of a polymerization catalyst, a polymerization initiating agent, an antistatic agent, an internal mold release agent, an antioxidizing agent, a light stabilizing agent, a anticoloring agent, a fluorescent dye, a dye, a pigment, a fragrance, a solvent, a leveling agent, and a resin modifying agent. The adhesive composition preferably includes at least one of an antioxidizing agent or a leveling agent.

For the antioxidizing agent, 2,6-di-tert-butyl-4-methylphenol, IRGANOX 245 manufactured by BASF Japan Ltd.: ethylenebis(oxyethylene) bis[3,5-tert-butyl-4-hydroxy-m-toluyl]propionate], IRGANOX 1076 manufactured by BASF Japan Ltd.: octadecyl-3-(3,5-di-tert-butyl-4-hydroxyphenyl) propionate, IRGANOX 1010 manufactured by BASF Japan Ltd.: pentaerythritol tetrakis[3-(3,5-di-tert-butyl-4-hydroxyphenyl)propionate], IRGANOX 1035, 1075, 104, 3790, 5057, 565 manufactured by BASF Japan Ltd., etc. can be used.

For the leveling agent, a silicone surfactant, a fluorine-containing surfactant, etc., can be used. Specifically, L-7001, L-7002, L-7604, FZ-2123 manufactured by Dow Toray Co., Ltd.; MEGAFACE F-470, MEGAFACE F-1405, MEGAFACE F-479 manufactured by DIC Corporation; FLORAD FC-430 manufactured by 3M Japan Limited, etc. can be used.

For the photostabilizing agent, a hindered amine compound having a 2,2,6,6-tetramethyl-4-piperidyl skeleton is preferably used, and a commercially available product can be used. Examples thereof include bis(2,2,6,6-tetramethyl-4-piperidyl)sebacate, bis(1,2,2,6,6-pentamethyl-4-piperidyl)sebacate, bis(1-octyloxy-2,2,6,6-tetramethyl-4-piperidyl)sebacate, 1-{2-[3-(3,5-di-t-butyl-4-hydroxyphenyl)propionyloxy]ethyl}-4-[3-(3,5-di-t-butyl-4-hydroxyphenyl)propionyloxy]-2,2,6,6-tetramethylpiperidine, 4-benzoyloxy-2,2,6,6-tetramethylpiperidine, methyl(1,2,2,6,6-pentamethyl-4-piperidyl)sebacate, 1,2,2,6,6-pentamethyl-4-piperidinyl methacrylate, 2-{[3,5-bis(1,1-dimethylethyl)-4-hydroxyphenyl]methyl}-2-butylpropanedioic acid (1,2,2,6,6-pentamethyl-4-piperidinyl), poly{[6-(1,1,3,3-tetramethylbutyl)amino-1,3,5-triazine-2,4-diyl][(2,2,6,6-tetramethyl-4-piperidyl)imino]hexamethylene [(2,2,6,6-tetramethyl-4-piperidyl)imino]}, 1,2,2,6,6-pentamethyl-4-piperidyl methacrylate, etc. Examples of a product name of the commercially available product include ADEKASTAB (registered trademark) LA series (LA-52, LA-57, LA-63P, LA-68, LA-72, LA-77Y, LA-81, LA-82, etc.) manufactured by ADEKA CORPORATION; TINUVIN (registered trademark) series (TINUVIN 123, TINUVIN 171, TINUVIN 249, TINUVIN 292, TINUVIN 765, TINUVIN 622SF, etc.), Chimassorb (registered trademark) series (Chimassorb 2020FDL, Chimassorb 944FDL) manufactured by BASF Japan Ltd., etc.

### (Method for producing adhesive composition)

An adhesive composition according to an embodiment is obtained by mixing a polyurethane urea resin and an organic solvent. The polyurethane urea resin may be a third reaction product of a second reaction product having two isocyanate groups with a monoamine. The second reaction product may be a reaction product of a first reaction product having two isocyanate groups with a first diamine. The first reaction product may be a reaction product of a first diol including a compound represented by Formula (Ia) below with a first polyisocyanate. In other words, a first diol is reacted with a first polyisocyanate to obtain a first prepolymer, this first prepolymer is reacted with a first diamine to obtain a second prepolymer, and then this second prepolymer is reacted with a monoamine to obtain the polyurethane urea resin. The details of a method for producing a polyurethane urea resin are described below.

First, a first polyisocyanate is brought into contact with a first diol to obtain a first reaction product. The first reaction product is a urethane prepolymer having two isocyanate groups, i.e., a first prepolymer. The first diol includes a compound represented by Formula (Ia) below.

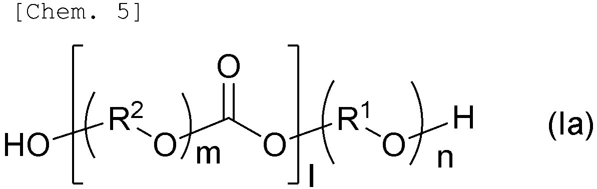

In Formula (Ia), R¹, R², l, m, and n are each the same as described for Formula (1).

A number average molecular weight of the first diol, based on a hydroxyl value of the first diol, is, for example, 500 or more and 4000 or less. The number average molecular weight is preferably 800 or more and 3000 or less and more preferably 1000 or more and 2000 or less.

The first diol may be polyether glycol, polyether (poly)carbonate diol, or a mixture thereof. The polyether glycol may be, for example, at least one compound selected from the group consisting of polytetramethylene ether glycol (PTMG), polypentamethylene ether glycol, polyhexylene ether glycol, polyheptamethylene ether glycol, polyoctamethylene ether glycol, polynonanemethylene ether glycol, and polydecanemethylene ether glycol. The polyether (poly) carbonate diol may be a reaction product obtained by a polymerization reaction of the above-described polyether glycol and a carbonate compound in the presence of a catalyst.

The first diol may include a polyol compound other than the compound represented by Formula (Ia). The polyol compound may include at least one from the group consisting of polyether polyol, polyester polyol, polycarbonate polyol, and polycaprolactone polyol.

The polycarbonate polyol may be "DURANOL (registered trademark)" series manufactured by Asahi Kasei Chemicals Corporation, "KURARAY POLYOL (registered trademark)" series manufactured by Kuraray Co., Ltd., "PLACCEL (registered trademark)" series manufactured by Daicel Corporation, "NIPPOLAN (registered trademark)" series manufactured by Tosoh Corporation, "ETERNACOLL" (registered trademark)" series manufactured by UBE Corporation, etc.

The polycaprolactone polyol is obtained, for example, by ring-opening polymerization of ε-caprolactone. The polycaprolactone polyol may be "PLACCEL (registered trademark)" series manufactured by Daicel Corporation.

Examples of the polyether polyol include "EXCENOL (registered trademark)" series and "EMULSTAR (registered trademark)" series manufactured by AGC Inc., "ADEKA Polyether" series manufactured by ADEKA CORPORATION, etc.

The polyester polyol may be "POLYLITE (registered trademark)" series manufactured by DIC Corporation, "NIPPOLAN (registered trademark)" series manufactured by Tosoh Corporation, "MAXIMOL (registered trademark)" series manufactured by Kawasaki Kasei Chemicals Ltd., etc.

The first polyisocyanate may be the same compound as the second polyisocyanate described above. The first polyisocyanate is preferably an alicyclic polyisocyanate and more preferably includes at least one selected from the group consisting of isophorone diisocyanate, 1,3-bis(isocyanatomethyl)cyclohexane, 1,4-bis(isocyanatomethyl)cyclohexane, dicyclohexylmethane-4,4'-diisocyanate (hydrogenated diphenylmethane diisocyanate), norbornane diisocyanate, 2,5-bis(isocyanatomethyl)-bicyclo[2,2,1]-heptane, and 2,6-bis(isocyanatomethyl)-bicyclo[2,2,1]-heptane.

A ratio M2/M1 of a molar amount M2 of a first diol to a molar amount M1 of a first polyisocyanate compound is preferably adjusted to 0.30 or more and 0.90 or less. When the ratio M2/M2 falls within the above-described range, a sufficient amount of a urethane bond is formed in a first prepolymer. From the viewpoint of enhancing functionality of an adhesive layer, the ratio M2/M1 is preferably 0.40 or more and more preferably 0.50 or more. From the viewpoint of enhancing adhesiveness of an adhesive layer, the ratio M2/M1 is preferably 0.85 or less, more preferably 0.80 or less, and further preferably 0.70 or less.

A ratio S4/S3 of a mass S4 of a first diol to a mass S3 of a first polyisocyanate is preferably adjusted to 0.1 or more and 20 or less. When the ratio S4/S3 falls within the above-described range, a second prepolymer with a sufficient amount of an isocyanate group per unit mass is obtained. The ratio S4/S3 is preferably 1 or more and 7 or less and more preferably 2 or more and 5 or less.

A number average molecular weight of a first prepolymer is preferably 500 or more and 10000 or less and more preferably 1000 or more and 5000 or less. The number average molecular weight of the first prepolymer can be measured in the same manner as for a second prepolymer. The number average molecular weight of the first prepolymer can be measured, for example, by gel permeation chromatography (GPC).

Next, the first reaction product is brought into contact with a first diamine to obtain a second reaction product. The second reaction product is a urethane urea prepolymer having two isocyanate groups, i.e., a second prepolymer.

The first reaction product may be brought into contact with the first diamine in two stages. In other words, the first reaction product may be brought into contact with a portion of the first diamine to obtain a 2' reaction product, which may then be brought into contact with a remainder of the first diamine to obtain the second reaction product. A proportion of the portion of the first diamine to a total amount of the first diamine is, for example, 10% by mass or more and 50% by mass or less and preferably 20% by mass or more and 40% by mass or less.

A number average molecular weight of a second prepolymer is preferably 5000 or more, more preferably 10000 or more, and further preferably 13000 or more. A second prepolymer having a large number average molecular weight tends to improve adhesiveness of a cured product. In other words, it is believed that the second prepolymer having a large number average molecular weight is more likely to entangle with each other, which increases cohesiveness and thus adhesive strength. The number average molecular weight of the second prepolymer is preferably 50000 or less, more preferably 40000 or less, and further preferably 30000 or less. A second prepolymer having an excessively large number average molecular weight includes fewer iso(thio)cyanate groups per unit mass, potentially leading to reduced adhesive strength. The number average molecular weight of the second prepolymer can be measured by gel permeation chromatography (GPC).

A first diamine preferably has a molar mass of 50 or more and 500 or less. A diamine having a molar mass falling within the above-described range tends to result in a second prepolymer having a desired number average molecular weight. The diamine more preferably has a molar mass of 50 or more and 300 or less.

Examples of the first diamine include isophoronediamine, ethylenediamine, 1,2-diaminopropane, 1,3-diaminopropane, 1,2-diaminobutane, 1,3-diaminobutane, 1,4-diaminobutane, 1,5-diaminopentane, 1,6-diaminohexane, piperazine, N,N-bis-(2-aminoethyl)piperazine, bis-(4-aminocyclohexyl)methane, bis-(4-amino-3-butylcyclohexyl)methane, 1,2-, 1,3-, and 1,4-diaminocyclohexane, norbornane diamine, hydrazine, adipic dihydrazine, phenylenediamine, 4,4'-diphenylmethanediamine, N,N'-diethylethylenediamine, N,N'-dimethylethylenediamine, N,N'-dipropylethylenediamine, N,N'-dibutylethylenediamine, N-methylethylenediamine, N-ethylethylenediamine, bis(hexamethylene)triamine, 1,2,5-pentanetriamine, etc.

The first diamine preferably includes at least one selected from the group consisting of isophoronediamine, ethylenediamine, bis-(4-aminocyclohexyl)methane, and 1,6-diaminohexane.

A ratio M3/M1 of a molar amount M3 of a first diamine to a molar amount M1 of a first polyisocyanate is preferably adjusted to 0.1 or more and 0.9 or less. When the ratio M3/M1 falls within the above-described range, a sufficient amount of a second prepolymer is produced. From the viewpoint of enhancing adhesiveness of an adhesive layer, the ratio M3/M1 is preferably 0.20 or more and more preferably 0.3 or more. From the viewpoint of enhancing functionality of an adhesive layer, the ratio M3/M1 is preferably 0.50 or less and more preferably 0.49 or less.

A ratio M3/M2 of a molar amount M3 of a first diamine to a molar amount M2 of a first diol is preferably adjusted to 0.01 or more and 0.9 or less. From the viewpoint of enhancing adhesiveness of an adhesive layer, the ratio M3/M2 is preferably 0.10 or more, more preferably 0.30 or more, and further preferably 0.50 or more.

A ratio S5/S6 of a mass S5 of the first diamine to a mass S6 of the first prepolymer is preferably 0.01 or more and 0.5 or less. When the ratio S5/S6 falls within the above-described range, a second prepolymer with a sufficient amount of an isocyanate group per unit mass is obtained. The ratio S5/S6 is more preferably 0.04 or more and 0.3 or less.

Next, the second reaction product is brought into contact with a monoamine to obtain a third reaction product. The third reaction product is a non-reactive urethane urea polymer without an active group such as an isocyanate group, i.e., a first polymer.

The monoamine is preferably a primary amine. The monoamine preferably includes an alkylamine or an amine having a 2,2,6,6-pentamethyl-4-piperidyl moiety represented by Formula (3) below. The alkylamine has, for example, 1 or more and 10 or less carbon atoms and preferably 2 or more and 7 or less carbon atoms. The alkylamine is preferably a normal-butylamine. From the viewpoint of enhancing adhesiveness, the alkylamine is preferably used.

The amine having a 2,2,6,6-pentamethyl-4-piperidyl moiety can function as a hindered amine and thus enhance photostability.

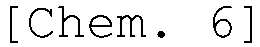

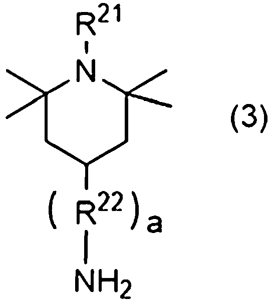

In Formula (3), R²¹ is a hydrogen atom or an alkyl group having 1 or more and 3 or less carbon atoms;
R²² is an alkylene group having 1 or more and 3 or less carbon atoms; and
a is 0 or 1.

The monoamine is preferably 1,2,2,6,6-pentamethyl-4-aminopiperidine in which R²¹ is a methyl group and a is 0.

A ratio M4/M1 of a molar amount M4 of a monoamine to a molar amount M1 of a first polyisocyanate is, for example, 0.01 or more and 0.5 or less and preferably 0.02 or more and 0.2 or less.

A ratio S7/S8 of a mass S7 of a monoamine to a mass S8 of a second prepolymer is preferably 0.001 or more and 0.100 or less. When the ratio S7/S8 falls within the above-described range, a first prepolymer with a sufficient amount of an isocyanate group per unit mass is obtained. The ratio S7/S8 is more preferably 0.002 or more and 0.030 or less.

The first to third reaction products as described above are preferably produced under an inert gas atmosphere such as nitrogen. These reaction products may also be produced in the presence of a reaction solvent. The first reaction product may be produced under a solvent-free condition, the resulting first reaction product may be dissolved in a reaction solvent, and then the first diamine may be added to the resulting solution to obtain a solution including a second reaction product. A monoamine may be added to this solution to obtain a solution including a third reaction product, i.e., an adhesive composition. The reaction solvent may be the same as the above-described organic solvent. The reaction solvent may be an organic solvent for the adhesive composition. Note that, the solution including a third reaction product may be dried to remove the reaction solvent and then the third reaction product may be dissolved or dispersed in an organic solvent to obtain an adhesive composition. Optional components such as a functional dye may be further added to the adhesive composition obtained by the above method.

### [Laminate]

A laminate according to an embodiment can be used as a binder sheet as described above. The laminate according to the embodiment can be used, in particular, as a functional sheet in which a functional dye such as a photochromic compound is incorporated into a resin layer.

The laminate includes a resin layer including a cured product of an adhesive composition according to an embodiment, and an optical substrate. The resin layer is laminated on at least one main surface of the optical substrate. The laminate may include first and second optical substrates, and a resin layer located between them to bond them together.

A thickness of the laminate according to the embodiment is preferably 100 µm or more, more preferably 120 µm or more, and further preferably 150 µm or more. A laminate with a higher thickness tends to increase shape stability. The thickness of the laminate is not particularly limited, but it is 1000 µm or less according to one example, 500 µm or less according to another example, and further preferably 400 µm or less. This enables a better handling property even when lenses for glasses with low center thicknesses are produced.

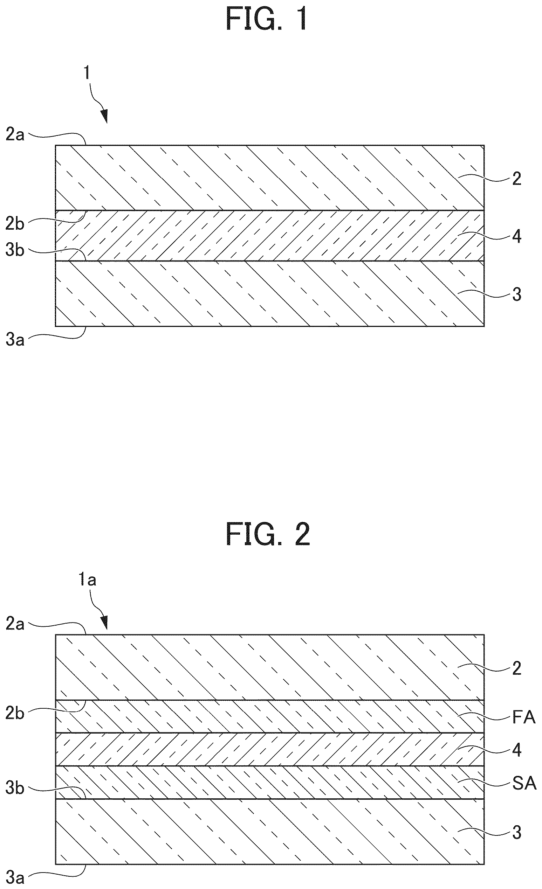

FIG. 1 is a cross-sectional view schematically showing one exemplary laminate according to the embodiment. A laminate 1 shown in FIG. 1 includes a first optical substrate 2, a second optical substrate 3, and a resin layer 4 interposed between them. The first optical substrate 2 has a first main surface 2a and a second main surface 2b. The first main surface 2a constitutes one outermost surface of the laminate 1. The second main surface 2b is in contact with the resin layer 4. The second optical substrate 3 has a first main surface 3a and a second main surface 3b. The first main surface 3a constitutes the other outermost surface of the laminate 1. The second main surface 3b is in contact with the resin layer 4.

### (First and second optical substrates)

An optical film or sheet with visible light transmittance can be used as the first or second optical substrate. The first or second optical substrate may be a colorless transparent film, a translucent film, or a colored transparent film.

A thickness of the first or second optical substrate is, for example, 10 µm or more and 100 µm or less and preferably 20 µm or more and 80 µm or less. The thickness of the second optical substrate may be identical to or different from that of the first optical substrate. The thickness of the first or second optical substrate may be, for example, 50 µm or more and 1000 µm or less or 200 µm or more and 500 µm or less.

The first or second optical substrate may include at least one resin selected from the group consisting of a polycarbonate resin, a cellulose resin, an acrylic resin, a methacrylic resin, a polyurethane resin, a polyurethane urea resin, a polyamide resin, a polyester resin, a polyimide resin, an epoxy resin, a polyolefin resin, and a polyvinyl alcohol resin.

The polycarbonate resin may be an aromatic polycarbonate resin mainly based on an aromatic phenol having a common bisphenol A skeleton, etc., and a polymer alloy of an aromatic polycarbonate resin and another resin, etc. Examples of the other resin include a synthetic resin such as a polyester resin, a polysiloxane resin, a polyamide resin, a polystyrene resin, a polyolefin resin, an acrylic resin, an amorphous polyolefin resin, ABS, or AS. A polycarbonate resin to be used for an optical sheet or an optical film preferably has a weight average molecular weight of 10,000 to 200,000 and more preferably 15,000 to 80,000.

Examples of the cellulose resin include diacetyl cellulose, tripropyl cellulose, dipropyl cellulose, etc.

For the polyamide resin, for example, a polyamide resin obtained by a polycondensation reaction of a ω-aminocarboxylic acid such as ε-caprolactam, 10-aminodecanoic acid lactam, or ω-laurin lactam, a polyamide resin obtained by a co-condensation polymerization reaction of a diamine and a dicarboxylic acid, and a copolymer thereof may be used. Among the polyamides obtained by a co-condensation polymerization reaction, an alicyclic polyamide resin or a semi-aromatic polyamide resin is preferred.

Examples of the polyester resin may include, for example, a polycondensation product of a dicarboxylic acid such as terephthalic acid or isophthalic acid with a diol such as ethylene glycol, butylene glycol, or 1,4-cyclohexanedimethanol.

For the (meth)acrylic resin, for example, a resin composed of a homopolymer such as methyl methacrylate or a copolymer of a plurality of (meth)acrylic monomers can be used.

For the polyurethane resin or the polyurethane urea resin, a known polyurethane or polyurethane urea resin obtained by reacting a diisocyanate compound such as isophorone diisocyanate with a polyol compound such as polycarbonate polyol or polyester polyol is used. Furthermore, a polyurethane or polyurethane urea resin obtained by reacting a chain extender such as a low molecular weight diol, triol, diamine, or triamine can be suitably used.

For the polyimide resin, a polymer of an aromatic tetracarboxylic acid and an aromatic diamine may be used. Examples of the aromatic tetracarboxylic acid include an aromatic tetracarboxylic acid derived from pyromellitic acid, 3,3',4,4'-biphenyl tetracarboxylic acid, 2,3',3,4-biphenyltetracarboxylic acid, 3,3',4,4'-benzophenone tetracarboxylic acid, 2,3,6,7 naphthalene tetracarboxylic acid, 2,2-bis(3,4-dicarboxyphenyl)propane, pyridine-2,3,5,6-tetracarboxylic acid, or an anhydride or a dianhydride thereof, or an ester compound or a halide thereof.

For the epoxy resin, for example, a resin obtained by a condensation reaction of bisphenol A, bisphenol F, etc., with epichlorohydrin, other functional epoxy resins, biphenyl epoxy resins, etc., can be suitably used.

For the polyolefin resin, for example, polypropylene, polyethylene, an ethylene-propylene copolymer, an ethylene-α-olefin copolymer, a propylene-α-olefin copolymer, etc., can be suitably used.

A polycarbonate resin is preferably used as the first or second optical substrate. Use of the polycarbonate resin provides a laminate with excellent adherence and appearance. When an adhesive composition including a urethane urea resin with a polyether polycarbonate structure is used, adherence to an adhesive layer including a cured product thereof tends to be enhanced.

### (Resin layer)

A resin layer is located between a first optical substrate and a second optical substrate. The resin layer may be in contact with a second main surface of the first optical substrate and a second main surface of the second optical substrate. In other words, the resin layer can function as an adhesive layer to bond the first optical substrate and the second optical substrate.

The resin layer includes a cured product of an adhesive composition according to an embodiment. The cured product is considered to include a structure represented by Formula (I). The resin layer may include a functional dye such as a photochromic compound.

A thickness of the resin layer is, for example, 0.1 µm or more and 100 µm or less. The thickness of the resin layer may be thinner or thicker than that of the first or second substrate.

### (Production method)

A method for producing a laminate according to an embodiment includes, for example, coating a support with the above-described adhesive composition to obtain a coated film; peeling the coated film from the support and laminating it on a second major surface of a first optical substrate; laminating a second optical substrate on the coated film so that a second major surface of the second optical substrate is in contact with the coated film to obtain a first structure; and heating the first structure to cure the coated film. Note that, the adhesive composition may be applied on the first optical substrate and dried to provide a coated film directly.

The method for producing a laminate will be described below in detail. First, a first optical substrate and a second optical substrate are prepared. A commercially available resin film or sheet can be used as the first optical substrate or the second optical substrate. A non-stretched sheet may be used, and this may be subjected to stretching and dyeing treatments. A commercially available saponified resin film or sheet may be used, or a resin film or sheet may be subjected to saponification. The first optical substrate or the second optical substrate may be subjected to a surface treatment such as an etching treatment, a corona treatment, etc.

Next, a support is coated with the above-described adhesive composition to form a coated film. The coated film is dried at a temperature of, for example, 70°C or more and 150°C or less for 1 minute or more to 1 hour or less to obtain a coated film. The coated film is peeled off from the support and laminated on a second main surface of the first optical substrate. A second main surface of the second optical substrate is laminated thereon so that it is in contact with the coated film. Thus, a first structure in which the first optical substrate, the coated film, and the second optical substrate are laminated in this order is obtained.

Next, the first structure is heated to cure the coated film. This procedure results in a laminate in which the first optical substrate and the second optical substrate are bonded by a resin layer. The first structure is, for example, heated at a temperature of 40°C or more and 160°C or less for 1 minute or more and 10 hours or less.

The resulting laminate may be subjected to a degassing treatment. For the degassing treatment, the laminate is left to stand under a vacuum of 500 Pa, for example, at a temperature of 40°C or more and 80°C or less for 5 hours or more and 20 hours or less. After the degassing treatment, the structure may be further subjected to a heat treatment.

### <Laminate variant 1>

A laminate may further include first and second adhesive layers. The first adhesive layer is located between a resin layer and a first optical substrate to bond them together. The second adhesive layer is located between a resin layer and a second optical substrate and bonds them together.

FIG. 2 is a cross-sectional view schematically showing another exemplary laminate. A laminate 1a shown in FIG. 2 has the same structure as the laminate 1 shown in FIG. 1, except that it includes a first adhesive layer FA between a resin layer 4 and a first optical substrate 2, and a second adhesive layer SA between the resin layer 4 and a second optical substrate 3.

A thickness of the first or second adhesive layer is, for example, 1 µm or more. A first or second adhesive layer with a higher thickness tends to improve adherence between the first or second optical substrate and the resin layer. The thickness of the first or second adhesive layer is preferably 3 µm or more and more preferably 5 µm or more. On the other hand, a first or second adhesive layer having an excessively high thickness tends to degrade appearance of a laminate. The thickness of the first or second adhesive layer is preferably 50 µm or less, more preferably 30 µm or less, and further preferably 20 µm or less.

At least one of the first adhesive layer or the second adhesive layer preferably includes a cured product of an adhesive composition according to an embodiment. Components and their content, etc., of the adhesive composition are preferably different from those of an adhesive composition for forming the resin layer. The first or second adhesive layer may include a cured product of an adhesive composition including a urethane urea resin that does not have a structure represented by Formula (I), but from the viewpoint of a photochromic property, at least a portion thereof preferably includes the structure of Formula (1). The urethane urea resin that does not have a structure represented by Formula (1) is, for example, obtained in the same manner as for the adhesive composition of the embodiment described above, except that a polycarbonate diol is used as a first diol. The first or second adhesive layer may include at least one resin selected from the group consisting of an epoxy resin, an oxetane resin, an acrylic resin, and a methacrylic resin.

The first or second adhesive layer can be formed, for example, by applying an adhesive composition onto a surface of at least one of a first optical substrate or a second optical substrate and curing it.

### <Laminate variant 2>

A laminate according to an embodiment may have a release substrate instead of an optical substrate. The laminate according to the embodiment may be a laminate of a first optical substrate, a resin layer, and a release substrate. This laminate can be used as a seal or a sticker, and an adhesive composition according to an embodiment can be used as a glue for the seal.

The release substrate is not particularly limited as long as it has a substrate having releasability. The release substrate can be made of paper or plastic. A surface of the release substrate may be coated with a release agent.

When the laminate is used as a seal, it is preferred to peel off the release substrate from the laminate, apply an adhesive serving as a resin layer to an adherend, and then heat it. Heating enables stronger adhesion. A heating temperature is, for example, 50°C or more and 150°C or less. The adherend is not particularly limited and may be plastic, metal, stone, wood, etc. The adherend is preferably plastic.

### <Support>

A laminate according to an embodiment may further include a support. The support may be located between a resin layer and a first or second adhesive layer, or between a first or second adhesive layer and a first or second optical substrate. The support can further enhance shape stability of the laminate. The support may be colorless transparent, white transparent, or colored transparent.

The support preferably includes, for example, at least one resin selected from the group consisting of polyethylene terephthalate, triacetyl cellulose, polyamide, a polycarbonate sheet, cellulose acetate butyrate, and (meth)acryl.

A thickness of the support is preferably 50 µm or more. A support having a higher thickness tends to increase strength of the laminate. The thickness of the support is not particularly limited, but it is 1000 µm or less according to one example and 500 µm or less according to another example.

### (Production method)

A method for producing a variant of a laminate according to an embodiment includes, for example, coating a main surface of at least one of a first optical substrate or a second optical substrate with a second adhesive composition and drying it to provide a first coated film and a second coated film; coating a support with the above-described first adhesive composition to obtain a third coated film; peeling the third coated film from the support and laminating it on the first coated film of the first optical substrate; laminating a second optical substrate thereon so that a second coated film is laminated on the third coated film on the first coated film to obtain a first structure; and heating the first structure to cure the first coated film, the second coated film, and the third coated film. Note that, the adhesive composition may be applied on the first coated film and dried to provide the third coated film directly.

The method for producing a variant of a laminate will be described below in detail. First, second main surfaces of a first optical substrate and a second optical substrate are coated with a second adhesive composition using, for example, a bar coater to form coated films. The coated films are dried at a temperature of, for example, 70°C or more and 150°C or less for 1 minute or more to 1 hour or less. This results in a first optical substrate with a first coated film formed on one main surface and a second optical substrate with a second coated film formed on one main surface.

Next, a support is coated with the above-described first adhesive composition to form a coated film. The coated film is dried at a temperature of, for example, 70°C or more and 150°C or less for 1 minute or more to 1 hour or less. Thus, a third coated film is obtained. The third coated film is peeled off from the support and laminated on the first coated film on the first optical substrate. Thus, a structure in which the first optical substrate, the first coated film, and the third coated film are laminated in this order is obtained.

Next, the second coated film on the second optical substrate is laminated thereon so that it is in contact with the third coated film. Thus, a first structure in which the first optical substrate, the first coated film, the third coated film, the second coated film, and the second optical substrate are laminated in this order is obtained.

Next, the first structure is heated to cure the first or third coated film. This procedure results in a laminate in which the first optical substrate and the second optical substrate are bonded via the first adhesive layer, the resin layer, and the second adhesive layer. The first structure is, for example, heated at a temperature of 40°C or more and 160°C or less for 1 minute or more and 240 hours or less.

The resulting laminate may be subjected to a degassing treatment. For the degassing treatment, the laminate is left to stand under a vacuum of 500 Pa, for example, at a temperature of 40°C or more and 80°C or less for 5 hours or more and 20 hours or less. After the degassing treatment, the structure may be further subjected to a heat treatment.

At least one of a first adhesive composition or a second adhesive composition is an adhesive composition according to an embodiment. The adhesive composition according to the embodiment is preferably used as the first adhesive composition, and more preferably, both the first and second adhesive compositions are the adhesive composition of the embodiment.

When the adhesive composition according to the embodiment is used as the first and second adhesive compositions, the first and second adhesive compositions preferably have compositions different from each other. Specifically, the first adhesive composition preferably includes a functional dye and a second polyisocyanate, while the second adhesive composition is preferably free of the functional dye or the second polyisocyanate. Furthermore, a polyurethane urea resin in the first adhesive composition and a polyurethane urea resin in the second adhesive composition preferably have compositions different from each other. In other words, a ratio M2/M1 of a molar amount M2 of a first diol to a molar amount M1 of a first polyisocyanate compound in production of the polyurethane urea resin included in the first adhesive composition is preferably higher than a ratio M2/M1 in production of the polyurethane urea resin included in the second adhesive composition. A ratio M3/M1 of a molar amount M3 of a first diamine to a molar amount M1 of a first polyisocyanate compound in production of the polyurethane urea resin included in the first adhesive composition is preferably lower than a ratio M3/M1 in production of the polyurethane urea resin included in the second adhesive composition. Use of such polyurethane urea resins with different ratios M2/M1 and M3/M1 can achieve a laminate with both excellent adhesiveness and functionality.

### [Coat layer-containing laminate]

A laminate according to an embodiment may include a coat layer. The coat layer covers at least a portion of a first optical substrate and a second optical substrate. The coat layer includes at least one resin selected from the group consisting of an epoxy resin, an oxetane resin, an acrylic resin, a methacrylic resin, and a urethane resin. The coat layer-containing laminate has excellent processing stability due to the presence of the coated layer. It also has excellent adherence to the below-described optical element substrate.

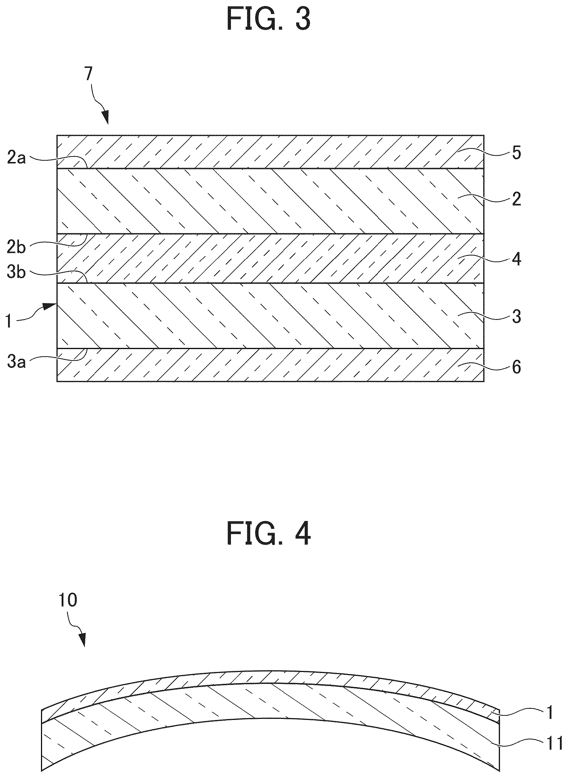

FIG. 3 is a cross-sectional view schematically showing one exemplary a coat layer-containing laminate according to the embodiment. A coat layer-containing laminate 7 shown in FIG. 3 includes the laminate 1 shown in FIG. 1, a first coat layer 5 that entirely covers a first main surface 2a of a first optical substrate 2, and a second coat layer 6 that entirely covers a first main surface 3a of a second optical substrate 3. The first coat layer 5 may cover a portion of the first main surface 2a, and the second coat layer 6 may cover a portion of the first main surface 3a. One of the first coat layer 5 and the second coat layer 6 may be omitted. Note that, the laminate 1a shown in FIG. 2 may be used instead of the laminate 1.

### <Coating layer>

A coat layer covers at least a portion of a surface of at least one of a first optical substrate or a second optical substrate. The coat layer preferably covers surfaces of both the first and second optical substrates. The coat layer preferably entirely covers surfaces of the first and second optical substrates. A larger area to be covered by the coat layer on the surface of the first and second optical substrates tends to improve adherence to an optical element substrate and shape stability of a laminate.

A thickness of the coat layer is, for example, 5 µm or more. A coat layer having a higher thickness tends to improve adherence to an optical element substrate and shape stability of a laminate. The thickness of the coat layer is preferably 10 µm or more, more preferably 20 µm or more, and further preferably 25 µm or more. On the other hand, a coat layer having an excessively high thickness tends to degrade appearance of a laminate. The thickness of the coat layer is preferably 100 µm or less, more preferably 75 µm or less, and further preferably 50 µm or less.

The coat layer includes at least one resin selected from the group consisting of an epoxy resin, an oxetane resin, an acrylic resin, a methacrylic resin, and a urethane resin. The coat layer preferably includes an epoxy resin. A coat layer including an epoxy resin tends to have excellent appearance and better adherence to an optical element substrate. A type of the resin included in the coat layer can be confirmed by gas chromatography or a Fourier transform infrared spectral (FT-IR) analysis.

A surface of the coat layer preferably has at least one functional group selected from the group consisting of an epoxy group, an acryloyl group, a methacryloyl group, and a vinyl group. A coat layer having the functional group on its surface tends to improve adherence to an optical element substrate. The coat layer more preferably includes at least one functional group selected from the group consisting of an acryloyl group, a methacryloyl group, and a vinyl group; and an epoxy group. Such a coat layer can further enhance adherence.

A presence of the functional group on the surface of the coat layer can be confirmed, for example, by a Fourier transform infrared spectral (FT-IR) analysis. That is, when an acryloyl group, a methacryloyl group, or a vinyl group is present on the surface, peaks can be detected in a range of 1600 cm⁻¹ or more and 1680 cm⁻¹ or less and 790 cm⁻¹ or more and 1000 cm⁻¹ or less in an IR spectrum.

The coat layer can be formed, for example, by applying a composition for forming a coat layer onto a surface of at least one of the first optical substrate or the second optical substrate and curing it. The composition for forming a coat layer includes at least one resin selected from the group consisting of an epoxy resin, an oxetane resin, an acrylic resin, a methacrylic resin, and a urethane resin; and an organic solvent.

### [Optical article]

An optical article according to an embodiment includes a laminate according to an embodiment. The optical article may include the laminate according to the embodiment and an optical element substrate covering at least a portion of a first optical substrate and a second optical substrate.

Examples of the optical article include a binder sheet, a lens, glasses, a window material for home or automobile, a liquid crystal display, a sun visor, a watch, etc. The lens includes a semi-finished lens or a finished lens.

FIG. 4 is a cross-sectional view schematically showing one exemplary optical article according to an embodiment. An optical article 10 shown in FIG. 4 includes a first optical element substrate 11 and the laminate 1 shown in FIG. 1. The optical article 10 has a concave-convex lens shape. The laminate 1 has a curved surface that follows the shape of a lens. The first optical element substrate 11 is located on a concave side. The first optical element substrate 11 entirely covers a surface of a second optical substrate which is not shown in the laminate 1. A side of the laminate 1 is not covered by the first optical element substrate 11. The side of the laminate 1 may be covered by the first optical element substrate 11. The laminate 1 and the first optical element substrate 11 may be integrated by, for example, thermal welding.

An optical article according to the embodiment may use the laminate 1a shown in FIG. 2 or the coat layer-containing laminate 7 shown in FIG. 3 instead of the laminate 1 shown in FIG. 1. The first optical element substrate 11 may entirely cover a surface of a first coat layer 5 of the coat layer-containing laminate 7.

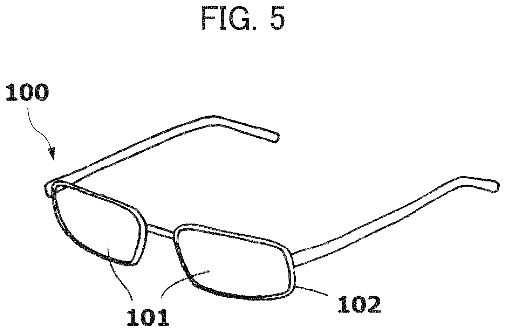

FIG. 5 is a perspective view schematically showing one exemplary glasses according to an embodiment. Eyeglasses 100 shown in FIG. 5 include lenses 101 and a frame 102 that supports the lenses 101. The lenses 101 each include an optical article 10 according to an embodiment.

### (Optical element substrate)

An optical element substrate can include a resin. The resin may include at least one selected from the group consisting of a polyester resin, a polyamide resin, an allyl resin, a (meth)acrylic resin, a polyurethane resin, a polyurethane urea resin, a polythiourethane resin, a polythiourethane urea resin, a polythioepoxy resin, and a polycarbonate resin. The optical element substrate preferably includes a polycarbonate resin.

### (Production method of optical article)

An optical article according to an embodiment is, for example, produced as described below. First, a laminate is subjected to shape processing. Specifically, the laminate is placed in a mold of a curved surface processing device. The mold has a lens shape such as a hemisphere. A bottom of the mold has a hole. A pressure regulator such as a vacuum pump is connected to the hole through a tube. The pressure regulator is activated to reduce a pressure in a space between the mold and the laminate. At this time, an environmental temperature may be set at 70°C or more and 160°C or less to allow the laminate to deform easily. After a certain period of time, the pressure regulator is stopped and the thus-deformed laminate is removed from the mold. The thus-removed laminate is cooled, for example, under a temperature of 0°C or more and 40°C or less. Thus, a curved laminate is obtained.

Next, the deformed laminate is placed inside a mold for injection molding. A liquid thermoplastic resin is poured onto a back (concave) surface of the laminate. An inside of the mold is cooled to solidify the thermoplastic resin. Thus, an optical article in which the thermoplastic resin serving as the optical element substrate and the laminate are integrated is obtained.

Alternatively, a curable composition of a thermosetting resin is poured into a mold in which a laminate is placed, thereby filling the mold with the curable composition. The mold that has been filled with the curable composition is heat-treated to cure the curable composition. For the heat treatment, for example, a temperature is gradually increased from room temperature to a cure temperature, and after reaching the cure temperature, the temperature is held for a certain period of time. The cure temperature is, for example, 60°C or more and 100°C or less. A heating rate is, for example, 1°C / hour or more and 10°C / hour or less. The curable composition is held at the curing temperature for, for example, 1 hour or more and 30 hours or less. After the heat treatment is completed, a cured product is removed from the mold. The thus-removed cured product is further heated in a range of 60°C or more and 150°C or less for 1 hour or more and 10 hours or less. Thus, an optical article in which a surface of a second optical substrate of a laminate is covered by an optical element substrate is obtained.

### EXAMPLES

The present invention will be described in more detail with reference to Examples exemplified below. These Examples are for illustrative purposes only and the spirit and the scope of the present invention are not limited to Examples.

Compounds used as components in Examples and Comparative Examples and abbreviations thereof are summarized below.
Photochromic compound
PC1: Compound represented by the following formula:

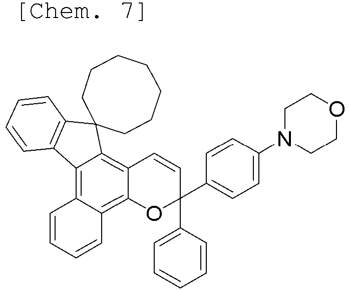

### First diol

PL1: PEPCD NT2006 manufactured by Mitsubishi Chemical Corporation (polyether polycarbonate diol composed of polytetramethylene oxide with a number average molecular weight of 650, number average molecular weight of 2000)
PL2: PEPCD NT1002 manufactured by Mitsubishi Chemical Corporation (polyether polycarbonate diol composed of polytetramethylene oxide with a number average molecular weight of 250, number average molecular weight of 1000)
PL3: PEPCD NT2002 manufactured by Mitsubishi Chemical Corporation (polyether polycarbonate diol composed of polytetramethylene oxide with a number average molecular weight of 250, number average molecular weight of 2000)
PL4: Polytetramethylene oxide 1000 (polyether polyol, number average molecular weight of 1000) manufactured by FUJIFILM Wako Pure Chemical Corporation
PL5: Polytetramethylene oxide 2000 (polyether polyol, number average molecular weight of 2000) manufactured by FUJIFILM Wako Pure Chemical Corporation
PL6: PTMG 4000 manufactured by Mitsubishi Chemical Corporation (polytetramethylene ether glycol, number average molecular weight 4000)
PL7: DURANOL manufactured by Asahi Kasei Chemicals Corporation (polycarbonate diol based on 1,5-pentanediol and hexanediol, number average molecular weight of 1000)
PL8: DURANOL manufactured by Asahi Kasei Chemicals Corporation (polycarbonate diol based on 1,5-pentanediol and hexanediol, number average molecular weight of 2000)

Properties of the first diol are summarized in Table 1 below.

### [Table 1]

**Table 1**

| | Type | Structure (l, m, n in Formula (Ia)) | | | Number average molecular weight |
|---|---|---|---|---|---|
| | | 1 | m | n | |
| PL1 | PEPCD | 2 | 9 | 9 | 2000 |
| PL2 | PEPCD | 2.5 | 3.5 | 3.5 | 1000 |
| PL3 | PEPCD | 6 | 3.5 | 3.5 | 2000 |
| PL4 | PTMG | 0 | 0 | 13.8 | 1000 |
| PL5 | PTMG | 0 | 0 | 27.8 | 2000 |
| PL6 | PTMG | 0 | 0 | 55.6 | 4000 |
| PL7 | PCD | - | - | - | 1000 |
| PL8 | PCD | - | - | - | 2000 |

First and second polyisocyanates
NCO1: Isophorone diisocyanate
NCO2: Dicyclohexylmethane-4,4-diisocyanate
NCO3: DURANATE TPA-100 manufactured by Asahi Kasei Chemicals Corporation (polyisocyanate with isocyanurate structure)
NCO4: DURANATE 24A-100 manufactured by Asahi Kasei Chemicals Corporation (polyisocyanate with biuret structure)
NCO5: DURANATE AE700-100 manufactured by Asahi Kasei Chemicals Corporation (polyisocyanate with adduct structure)
NCO6: DURANATE E402-100 manufactured by Asahi Kasei Chemicals Corporation (polyisocyanate with adduct structure)
NCO7: DURANATE SBB-70P manufactured by Asahi Kasei Chemicals Corporation (polyblock isocyanate with biuret structure)
NCO8: TRIXENE BI7992 manufactured by GSI Creos Corporation (polyblock isocyanate with biuret structure)

### First diamine

H1: Bis-(4-aminocyclohexyl)methane
H2: Isophorone diamine

### Monoamine

HA1; 1,2,2,6,6-pentamethyl-4-aminopiperidine
HA2: Normal-butylamine

### Organic solvent

D1: Mixed solvent of diethyl ketone/tertiary-butanol at a volume ratio of 8/2
D2: Propylene glycol-monomethyl ether
D3: Diethyl ketone

### Other components

L1: Ethylene bis(oxyethylene) bis[3-(5-tert-butyl-4-hydroxy-m-tolyl) propionate]
L2: FZ2162 manufactured by The Dow Chemical Company

### (Synthesis of polyurethane urea resin solutions US1 to US16)

First, 269.9 g of polyether polycarbonate diol (PL1) with a number average molecular weight of 2000 and 50 g of isophorone diisocyanate (NCO1) were charged into a 3-necked flask equipped with a stirring blade, a condense tube, a thermometer, and a nitrogen gas inlet tube and reacted under a nitrogen atmosphere at 130°C for 8 hours. Thus, a urethane prepolymer was synthesized. An endpoint of the reaction was confirmed by back titration of an isocyanate group. After the reaction was completed, the resulting reaction solution was cooled to about 30°C and dissolved in 630 g of an 8/2 mixed solvent of diethyl ketone/tertiary-butanol ((organic solvent) component: D1). After cooling the reaction solution to 0°C, 4.97 g of bis-(4-aminocyclohexyl)methane (H1) serving as a chain extender was added dropwise. After stirring for 1 hour, the resulting reaction solution was heated to 25°C. Then, 10.43 g of the H1 was added dropwise thereto and the resultant was stirred for 1 hour. Thereafter, 4.1 g of 1,2,2,6,6-pentamethyl-4-aminopiperidine (HA1) was added dropwise thereto and allowed to react for 1 hour to obtain a solution US1 of a urethane urea resin in diethylketone/tertiary-butanol. An infrared absorption spectrum of the resulting polyurethane urea resin showed no absorption derived from an isocyanate group at molecular ends, confirming that no isocyanate groups remain at the molecular ends. A softening point was 95°C as measured by TMA.

Polyurethane urea resin solutions US2 to US16 were obtained in the same manner as for the polyurethane urea resin solution US1, except that incorporated components were changed as shown in Table 2.

### [Table 2]

**Table 2**

| | First diol | | First diamine | | Monoamine | | Organic solvent | | Urethane urea resin | |
|---|---|---|---|---|---|---|---|---|---|---|
| | Type | Added amount (g) | Type | Added amount (g) | Type | Added amount (9) | Type | Added amount (g) | Incorporated molar ratio | Softening point (°C) |
| US1 | PL1 | 269.9 | H1 | 15.38 | HA1 | 4.1 | D1 | 630.3 | 0.6/1/0.325/0.106 | 90 |
| US2 | PL1 | 224.9 | H1 | 20.11 | HA1 | 4.1 | D1 | 979.1 | 0.5/1/0.425/0.106 | 130 |
| US3 | PL2 | 157.5 | H1 | 10. 65 | HA1 | 4.1 | D1 | 412.8 | 0.7/1/0.225/0.106 | 60 |
| US4 | PL1 | 314. 9 | H1 | 10. 65 | HA1 | 4.1 | D1 | 705.1 | 0.7/1/0.225/0.106 | 60 |
| US5 | PL3 | 314. 9 | H1 | 10. 65 | HA1 | 4.1 | D1 | 705.1 | 0.7/1/0.225/0.106 | 50 |
| US6 | PL4 | 157.5 | H1 | 10. 65 | HA1 | 4.1 | D1 | 412.8 | 0.7/1/0.225/0.106 | 95 |
| US7 | PL5 | 314. 9 | H1 | 10. 65 | HA1 | 4.1 | D1 | 705.1 | 0.7/1/0.225/0.106 | 60 |
| US8 | PL6 | 630.0 | H1 | 10. 65 | HA1 | 4.1 | D1 | 1290.3 | 0.7/1/0.225/0.106 | - |
| US9 | PL7 | 157.5 | H1 | 10. 65 | HA1 | 4.1 | D1 | 412.8 | 0.7/1/0.225/0.106 | 100 |
| US10 | PL8 | 314. 9 | H1 | 10. 65 | HA1 | 4.1 | D1 | 705.1 | 0.7/1/0.225/0.106 | 85 |
| US11 | PL2 | 112.5 | H2 | 18.00 | HA2 | 0.6 | D2 | 1026.2 | 0.5/1/0.47/0.03 | 140 |
| US12 | PL2 PL7 | 56.25 56.25 | H2 | 18.00 | HA2 | 0.6 | D2 | 1026.2 | 0.5/1/0.47/0.03 | 150 |
| US13 | PL3 | 225.0 | H2 | 18.00 | HA2 | 0.6 | D2 | 1663. 7 | 0.5/1/0.47/0.03 | 120 |
| US14 | PL7 | 112.5 | H2 | 18.00 | HA2 | 0.6 | D2 | 1026.2 | 0.5/1/0.47/0.03 | 170 |
| US15 | PL1 | 247.4 | H1 | 17.70 | HA1 | 4.1 | D1 | 592.8 | 0.55/1/0.375/0.106 | 110 |
| US16 | PL2 | 112.5 | H2 | 17.20 | HA2 | 1 | D2 | 1026.2 | 0.5/1/0.45/0.05 | 135 |

Note that, in the column "incorporated molar ratio" in Table 2, a molar ratio of a first diol/a first isocyanate/a first diamine/a monoamine is described.

### <Example 1>

### (Preparation of photochromic adhesive composition AC1)

Fifty grams of the urethane urea resin solution US1, 1.27 g of the photochromic compound (PC1), 2.8 g of dicyclohexylmethane-4,4-diisocyanate serving as a crosslinking agent, 0.2 g of ethylene bis(oxyethylene) bis[3-(5-tert-butyl-4-hydroxy-m-tolyl)propionate] serving as an antioxidizing agent, and 0.016 g of FZ2162 serving as a surfactant were added, and the resulting mixture was stirred and mixed at room temperature to obtain a mixture for forming a photochromic adhesive composition.

### <Examples 2 to 13, 27 to 35, and Comparative Examples 1 to 3>

Adhesive compositions AC2 to AC16 were obtained in the same manner as in Example 1, except that formulations were changed as shown in Table 3.

### [Table 3]

**Table 3**

| | Adhesive composition | PC Compound | Urethane urea resin solution | | Second isocyanate | | Organic solvent | | Additive | |
|---|---|---|---|---|---|---|---|---|---|---|
| | | | Type | Added amount (g) | Type | Added amount (g) | Type | Added amount (9) | Type | Added amount (mg) |
| Example 1 | AC1 | PC1 | US1 | 50.0 | NCO2 | 2.8 | D3 | 23.6 | L1/L2 | 203/16 |
| Example 2 | AC2 | PC1 | US2 | 50.0 | NCO2 | 2.8 | D3 | 0.0 | L1/L2 | 203/16 |
| Example 3 | AC3 | PC1 | US3 | 50.0 | NCO2 | 2.8 | D3 | 23.6 | L1/L2 | 203/16 |
| Example 4 | AC4 | PC1 | US4 | 50.0 | NCO2 | 2.8 | D3 | 23.6 | L1/L2 | 203/16 |
| Example 5 | AC5 | PC1 | US5 | 50.0 | NCO2 | 2.8 | D3 | 23.6 | L1/L2 | 203/16 |
| Example 6 | AC6 | PC1 | US6 | 50.0 | NCO2 | 2.8 | D3 | 23.6 | L1/L2 | 203/16 |
| Example 7 | AC7 | PC1 | US7 | 50.0 | NCO2 | 2.8 | D3 | 23.6 | L1/L2 | 203/16 |
| Example 8 | AC8 | PC1 | US8 | 50.0 | NCO2 | 2.8 | D3 | 23.6 | L1/L2 | 203/16 |
| Example 9 | AC9 | PC1 | US2 | 50.0 | NCO3 | 2.2 | D3 | 0.0 | L1/L2 | 203/16 |
| Example 10 | AC10 | PC1 | US2 | 50.0 | NCO4 | 2.2 | D3 | 0.0 | L1/L2 | 203/16 |
| Comparative Example 1 | AC11 | PC1 | US9 | 50.0 | NCO2 | 2.8 | D3 | 0.0 | L1/L2 | 203/16 |
| Comparative Example 2 | AC12 | PC1 | US10 | 50.0 | NCO2 | 2.8 | D3 | 23.6 | L1/L2 | 203/16 |
| Example 11 | AC13 | - | US11 | 100.0 | - | - | - | - | - | - |
| Example 12 | AC14 | - | US12 | 100.0 | - | - | - | - | - | - |
| Example 13 | AC15 | - | US13 | 100.0 | - | - | - | - | - | - |
| Comparative Example 3 | AC16 | - | US14 | 100.0 | - | - | - | - | - | - |
| Example 27 | AC17 | PC1 | US15 | 50.0 | NCO4 | 2.8 | D3 | 23.6 | L1/L2 | 203/16 |
| Example 28 | AC18 | PC1 | US1 | 50.0 | NCO 5 | 2.8 | D3 | 23.6 | L1/L2 | 203/16 |
| Example 29 | AC19 | PC1 | US1 | 50.0 | NCO 6 | 2.8 | D3 | 23.6 | L1/L2 | 203/16 |
| Example 30 | AC20 | PC1 | US1 | 50.0 | NCO 7 | 2.8 | D3 | 23.6 | L1/L2 | 203/16 |
| Example 31 | AC21 | PC1 | US1 | 50.0 | NCO 8 | 2.8 | D3 | 23.6 | L1/L2 | 203/16 |
| Example 32 | AC22 | PC1 | US1 | 50.0 | NCO4 | 4.2 | D3 | 27.2 | L1/L2 | 203/16 |
| Example 33 | AC23 | PC1 | US1 | 50.0 | NCO4 | 5.6 | D3 | 30.8 | L1/L2 | 203/16 |
| Example 34 | AC24 | - | US16 | 100.0 | - | - | - | - | - | - |
| Example 35 | AC25 | PC1 | US1 | 50.0 | NCO4 | 2.8 | D3 | 23.6 | L1/L2 | 203/16 |

### <Example 14>

### (Production of photochromic laminate)

The polyurethane urea resin solution US14 was used as the adhesive composition AC16 to form an adhesive layer. One of main surfaces of a polycarbonate sheet with a thickness of 300 µm was coated with the adhesive composition AC16 and the resulting coated film was dried at 110°C for 10 minutes to obtain a polycarbonate sheet including an adhesive layer with a thickness of 10 µm. Two such polycarbonate sheets were obtained.

A polyethylene terephthalate (PET) film (PUREX film manufactured by Teijin-DuPont Films Incorporated, with silicon-coated film) was coated with the adhesive composition AC1 and the resulting coated film was dried at 80°C for 5 minutes to obtain a dry film with a thickness of about 30 µm. The dry film was peeled off the PET film and placed between the polycarbonate sheets with adhesive layers so that the dry film was in contact with each of the adhesive layers. The resulting laminate was left to stand under a vacuum at 40°C for 20 hours, heat-treated at 100°C for 1 hour, humidified at 60°C and 80% RH for 22 hours, and finally left to stand under a vacuum at 80°C for 6 hours to obtain a photochromic laminate LB1 in which a first optical substrate, a first adhesive layer, a resin layer, a second adhesive layer, and a second optical substrate were laminated in this order.

### <Examples 15 to 26, 36 to 44, and Comparative Examples 4 and 5>

Laminates LB2 to LB15 were obtained in the same manner as in Example 14, except that types of adhesive compositions were changed as shown in Tables 4 and 5.

### <Example 45>

A laminate LB25 was obtained in the same manner as in Example 14, except that a polycarbonate sheet with a thickness of 100 µm was used and types of adhesive compositions were changed as shown in Table 5.

### <Example 46>

A laminate LB25 was obtained in the same manner as in Example 14, except that a polycarbonate sheet with a thickness of 200 µm was used and types of adhesive compositions were changed as shown in Table 5.

### <Example 47>

### (Preparation of photochromic adhesive composition AC25)

Fifty grams of the urethane urea resin solution US4, 1.27 g of the photochromic compound (PC1), 0.2 g of ethylene bis(oxyethylene) bis[3-(5-tert-butyl-4-hydroxy-m-tolyl)propionate] serving as an antioxidizing agent, and 0.016 g of FZ2162 serving as a surfactant were added, and the resulting mixture was stirred and mixed at room temperature to obtain a photochromic adhesive composition AC25.

### <Comparative Example 6>

An adhesive composition AC26 was obtained in the same manner as in Example 47, except that the US9 was used for a urethane urea resin solution as shown in Table 6.

### <Example 48>

A saponified triacetyl cellulose (TAC) film with a thickness of 60 µm was prepared as a first optical substrate. The TAC film was coated with the adhesive composition AC25 and the resulting coated film was dried at 80°C for 5 minutes to obtain a dry film with a thickness of about 30 µm. The dry film was placed in contact with an adherend substrate, a diethylene glycol bis-allyl carbonate resin with a thickness of about 2 mm. The resulting laminate was heat-treated at 90°C for 1 hour to obtain a photochromic laminate LB28 in which a first optical substrate, a resin layer, and an adherend substrate were laminated in this order.

### <Comparative Example 7>

A photochromic laminate LB29 was obtained in the same manner as in Example 48, except that types of adhesive compositions were changed as shown in Table 7.

### <Evaluation>

The laminates obtained in Examples and Comparative examples were measured for a photochromic property and peel strength. The results are shown in Tables 4 to 7.

### Photochromic property

The resulting laminate was used as a sample, the photochromic property of the laminate was measured by irradiating the laminate with a xenon lamp L-2480 (300W) SHL-100 manufactured by HAMAMATSU PHOTONICS K.K. at 23°C through an aeromass filter (manufactured by Corning Incorporated) at a beam intensity on a surface of the laminate of 365 nm = 2.4 mW/cm² and 245 nm = 24 µW/cm² for 300 seconds to develop color.
1) Maximum absorption wavelength (λmax): Maximum absorption wavelength after color development as determined by a spectrophotometer manufactured by Otsuka Electronics Co., Ltd. (instantaneous multichannel photodetector MCPD1000). The maximum absorption wavelength is related to a color tone upon color development.
2) Color developing density [ε(120)-ε(0)]: Difference between an absorbance ε(120) after irradiation for 300 seconds at the maximum absorption wavelength and an absorbance ε(0) when not irradiated at the maximum absorption wavelength. The higher this value, the better the photochromic property.
3) Color fading speed [t1/2 (sec.)] : Period of time taken by an absorbance at the above-mentioned maximum absorption wavelength of the sample to decrease to 1/2 of [ε(120)-ε(0)] when irradiation is stopped after irradiation for 300 seconds. The shorter this period, the better the photochromic property.

### Peel strength

The resulting photochromic laminate was formed into a test piece with a 25 x 100 mm adhesive portion, mounted in a tester (Autograph AGS-500NX, SHIMADZU CORPORATION) equipped with a thermostatic chamber, and left to stand at 70°C for 10 minutes before being pulled at a crosshead speed of 100 mm/min. Thus, peel strength was measured.

### [Table 4]

**Table 4**

| | Laminate | Layer structure | | | Photochromic property | | | Peel strength |
|---|---|---|---|---|---|---|---|---|
| | | First adhesive layer | Resin layer | Second adhesive layer | Maximum absorption wavelength (nm) | Color developing density (abs) | Color fading speed (sec) | |
| Example 14 | LB1 | AC16 | AC1 | AC16 | 455 | 1.04 | 51 | 30 |
| Example 15 | LB2 | AC16 | AC2 | AC16 | 455 | 1.04 | 51 | 60 |
| Example 16 | LB3 | AC16 | AC3 | AC16 | 455 | 1.02 | 56 | 20 |
| Example 19 | LB6 | AC16 | AC6 | AC16 | 455 | 1.05 | 56 | - |
| Example 21 | LB8 | AC16 | AC8 | AC16 | 455 | 1.05 | 47 | - |
| Example 22 | LB9 | AC13 | AC2 | AC13 | 455 | 1.05 | 48 | 70 |
| Example 23 | LB10 | AC14 | AC2 | AC14 | 455 | 1.04 | 49 | 80 |
| Example 24 | LB11 | AC15 | AC2 | AC15 | 455 | 1.02 | 45 | 60 |
| Example 25 | LB12 | AC14 | AC9 | AC14 | 455 | 1.05 | 50 | 100 |
| Example 26 | LB13 | AC14 | AC10 | AC14 | 455 | 1.05 | 48 | 90 |
| Comparative Example 4 | LB14 | AC16 | AC11 | AC16 | 455 | 1.00 | 81 | 100 |

### [Table 5]

**Table 5**

| | Laminate | Layer structure | | | Photochromic property | | | Peel strength |
|---|---|---|---|---|---|---|---|---|
| | | First adhesive layer | Resin layer | Second adhesive layer | Maximum absorption wavelength (nm) | Color developing density (abs) | Color fading speed (sec) | |
| Example 17 | LB4 | AC16 | AC4 | AC16 | 455 | 1.04 | 51 | - |
| Example 18 | LB5 | AC16 | AC5 | AC16 | 455 | 1.02 | 52 | - |
| Example 20 | LB7 | AC16 | AC7 | AC16 | 455 | 1.05 | 51 | 30 |
| Comparative Example 5 | LB15 | AC16 | AC12 | AC16 | 455 | 0.99 | 63 | 100 |
| Example 36 | LB16 | AC24 | AC25 | AC24 | 455 | 1.05 | 45 | 50 |
| Example 37 | LB18 | AC24 | AC17 | AC24 | 455 | 1.05 | 45 | 60 |
| Example 38 | LB19 | AC13 | AC17 | AC13 | 455 | 1.05 | 46 | 60 |
| Example 39 | LB20 | AC13 | AC18 | AC13 | 455 | 1.05 | 47 | 25 |
| Example 40 | LB21 | AC13 | AC19 | AC13 | 455 | 1.05 | 47 | 50 |
| Example 41 | LB22 | AC13 | AC20 | AC13 | 455 | 1.05 | 48 | 5 |
| Example 42 | LB23 | AC13 | AC21 | AC13 | 455 | 1.05 | 48 | 5 |
| Example 43 | LB24 | AC13 | AC22 | AC13 | 455 | 1.05 | 45 | 50 |
| Example 44 | LB25 | AC13 | AC23 | AC13 | 455 | 1.05 | 47 | 50 |
| Example 45 | LB26 | AC24 | AC17 | AC24 | 455 | 1.05 | 46 | 50 |
| Example 46 | LB27 | AC24 | AC17 | AC24 | 455 | 1.05 | 46 | 55 |

### [Table 6]

**Table 6**

| | Adhesive composition | PC Compound | Urethane urea resin solution | | Additive | |
|---|---|---|---|---|---|---|
| | | | Type | Added amount (g) | Type | Added amount (mg) |
| Example 47 | AC25 | PC1 | US4 | 50.0 | L1/L2 | 203/16 |
| Comparative Example 6 | AC26 | PC1 | US9 | 50.0 | L1/L2 | 203/16 |

### [Table 7]

**Table 7**

| | Laminate | Layer structure | | Photochromic property | | |
|---|---|---|---|---|---|---|
| | | Resin layer | Adherend substrate | Maximum absorption wavelength (nm) | Color developing density (abs) | Color fading speed (sec) |
| Example 48 | LB28 | AC25 | Allyl diglycol carbonate | 455 | 1.04 | 50 |
| Comparative Example 7 | LB29 | AC26 | Allyl diglycol carbonate | 455 | 1.04 | 80 |

As is clear from the above examples, the laminate using the photochromic composition mixed with the polyurethane urea resin having the structure represented by Formula (I) such as a polytetramethylene group has an excellent photochromic property. Peel strength is increased by using polyurethane having a high softening point and derived from a polyether polycarbonate diol. When the polyurethane urea resin having the structure represented by formula (I) is also used in the adhesive layer, an even better photochromic property is achieved. Furthermore, triisocyanate can be incorporated into the adhesive composition to improve peel strength without decreasing a color fading speed.

On the other hand, a sufficient photochromic property cannot be obtained when a polycarbonate diol is used as in Comparative Example 1. Although the polyol with a higher molecular weight as in Comparative Example 2 improves the photochromic property, this photochromic property was not sufficient compared to the polyurethane urea resin having the structure represented by formula (I). As shown in Table 7, a seal-shaped laminate of Example 48 exhibited an excellent photochromic property. For the laminate of Example 48, the resin layer adhered well to the adherend substrate and did not peel off easily by hand. On the other hand, a seal-shaped laminate of Comparative Example 7 did not achieve high adherence.

Preferred embodiments of the present invention will be described in addition.
[1] An adhesive composition including:
   a polyurethane urea resin having a urea bond, a urethane bond,
   and a structure represented by Formula (I) below; and
   an organic solvent: 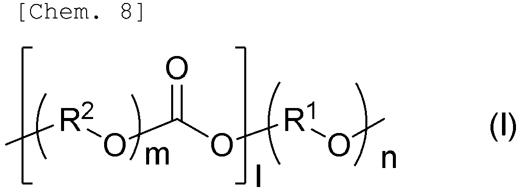
   in which
   R¹ and R² are each independently a linear alkylene group having 3 or more and 10 or less carbon atoms;
   l is 0, or 1 or more and 25 or less; and
   n and m are each independently 2 or more and 70 or less.
[2] The adhesive composition according to [1], in which l in Formula (I) is 1 or more and 25 or less.
[3] The adhesive composition according to [1] or [2], further including a functional dye.
[4] The adhesive composition according to any one of [1] to [3], further including a photochromic compound.
[5] The adhesive composition according to any one of [1] to [4], in which the polyurethane urea resin includes a third reaction product of a second reaction product having two isocyanate groups with a monoamine,
   the second reaction product includes a reaction product of a first reaction product having two isocyanate groups with a first diamine, and
   the first reaction product includes a reaction product of a first diol including a compound represented by Formula (Ia) below with a first polyisocyanate: 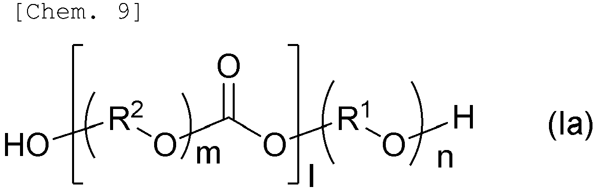 in which R¹, R², l, m, and n are each the same as described for Formula (1).
[6] The adhesive composition according to [5], in which a ratio M3/M2 of a molar amount M3 of the first amine to the molar amount M2 of the first diol is 0.1 or more and 0.9 or less.
[7] The adhesive composition according to [5] or [6], in which a number average molecular weight of the first diol, based on a hydroxyl value of the first diol, is 500 or more and 4000 or less.
[8] The adhesive composition according to any one of [1] to [7], in which a softening point of the polyurethane urea resin as measured by a thermomechanical analysis (TMA) is 40°C or more and 200°C or less.
[9] The adhesive composition according to any one of [1] to [8], further including a second polyisocyanate compound.
[10] A cured product of the adhesive composition according to any one of [1] to [9].
[11] A laminate including:
   a resin layer including the cured product according to [10]; and
   an optical substrate.
[12] A laminate including:
   a first optical substrate;
   a second optical substrate;
   the resin layer including the cured product according to [10]; a first adhesive layer for use in adhesion of the first optical substrate and the resin layer; and
   a second adhesive layer for use in adhesion of the second optical substrate and the resin layer.
[13] The laminate according to [12], in which at least one of the first adhesive layer or the second adhesive layer includes the cured product according to [10].
[14] The laminate according to [11], in which the optical substrate includes at least one resin selected from the group consisting of a polycarbonate resin, a cellulose resin, and a polyvinyl alcohol resin.
[15] An optical article including
   the laminate according to [11].
[16] A lens including
   the optical article according to [15].
[17] Glasses including
   the lens according to [16].

## Claims

1. An adhesive composition comprising:
a polyurethane urea resin having a urea bond, a urethane bond, and a structure represented by Formula (I) below; and
an organic solvent: 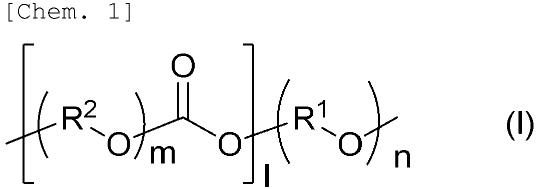 wherein
R¹ and R² are each independently a linear alkylene group having 3 or more and 10 or less carbon atoms;
l is 0, or 1 or more and 25 or less; and
n and m are each independently 2 or more and 70 or less.

2. The adhesive composition according to claim 1, wherein l in Formula (I) is 1 or more and 25 or less.

3. The adhesive composition according to claim 1, further comprising a functional dye.

4. The adhesive composition according to claim 1, further comprising a photochromic compound.

5. The adhesive composition according to claim 1, wherein the polyurethane urea resin comprises a third reaction product of a second reaction product having two isocyanate groups with a monoamine,
the second reaction product comprises a reaction product of a first reaction product having two isocyanate groups with a first diamine, and
the first reaction product comprises a reaction product of a first diol comprising a compound represented by Formula (Ia) below with a first polyisocyanate: 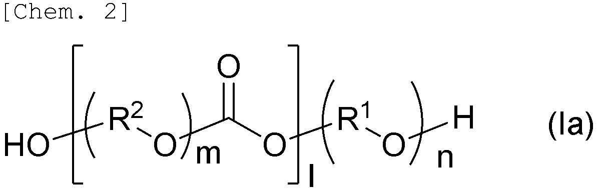
wherein R¹, R², l, m, and n are each the same as described for Formula (1).

6. The adhesive composition according to claim 5, wherein a ratio M3/M2 of a molar amount M3 of the first diamine to a molar amount M2 of the first diol is 0.1 or more and 0.9 or less.

7. The adhesive composition according to claim 5, wherein a number average molecular weight of the first diol, based on a hydroxyl value of the first diol, is 500 or more and 4000 or less.

8. The adhesive composition according to claim 1, wherein a softening point of the polyurethane urea resin as measured by a thermomechanical analysis (TMA) is 40°C or more and 200°C or less.

9. The adhesive composition according to claim 1, further comprising a second polyisocyanate compound.

10. A cured product of the adhesive composition according to claim 1.

11. A laminate comprising:
a resin layer comprising the cured product according to claim 10; and
an optical substrate.

12. A laminate comprising:
a first optical substrate;
a second optical substrate;
a resin layer comprising the cured product according to claim 10;
a first adhesive layer for use in adhesion of the first optical substrate and the resin layer; and
a second adhesive layer for use in adhesion of the second optical substrate and the resin layer.

13. The laminate according to claim 12, wherein at least one of the first adhesive layer or the second adhesive layer comprises the cured product according to claim 10.

14. The laminate according to claim 11, wherein the optical substrate comprises at least one resin selected from the group consisting of a polycarbonate resin, a cellulose resin, and a polyvinyl alcohol resin.

15. An optical article comprising
the laminate according to claim 11.

16. A lens comprising
the optical article according to claim 15.

17. Glasses comprising
the lens according to claim 16.
